# EUROPEAN PATENT SPECIFICATION

(11) **EP 3 551 316 B1**
(45) Date of publication and mention of the grant of the patent: **07.05.2025**
(21) Application number: 17822952.2
(22) Date of filing: 12.12.2017
(51) Int. Cl.: B01D 46/52, F02M 35/024

(54) **FILTER MEDIA PACKS AND FILTER ELEMENTS**
FILTERMEDIENPACKS UND FILTERELEMENTE
PACKS DE MATÉRIAUX FILTRANTS ET ÉLÉMENTS DE FILTRE

(30) Priority: 12.12.2016 US 201662433145 P
(43) Date of publication of application: 16.10.2019
(73) Proprietor: Donaldson Company, Inc., Bloomington, MN 55431 (US)
(72) Inventor: ADAMEK, Daniel E., Minneapolis, Minnesota 55440-1299 (US); BROWN, Scott M., Minneapolis, Minnesota 55440-1299 (US); SALA, Mark A., Minneapolis, Minnesota 55440-1299 (US)
(74) Representative: Eisenführ Speiser
(86) International application number: PCT/US2017/065889
(87) International publication number: WO 2018/111923

(56) References cited:
- WO-A1-2016/014549
- US-A- 3 966 646
- US-A1- 2010 326 396
- US-A1- 2014 325 946

## Description

### Field

Embodiments herein relate to filter media, filter media packs, filter elements, air cleaners, and methods of making and using filter media, media packs, elements and air cleaners. More specifically, embodiments herein relate to z-flow filter media, media packs, and filter elements.

### Background

Z-flow filter media, such as that described in U.S. Patent No. 7,959,702 to inventor Rocklitz, has a plurality of layers of media. Each layer has a fluted sheet, a facing sheet, and a plurality of flutes extending from a first face to a second face of the filtration media pack. A first portion of the plurality of flutes are closed to unfiltered air flowing into the first portion of the plurality of flutes, and a second portion of the plurality of flutes are closed to unfiltered air from flowing out of the second portion of the plurality of flutes. Air passing into flutes on one face of the media pack passes through filter media before flowing out flutes on the other face of the media pack. WO 2016/014549 A1 discloses a filter element including a first filter media pack with an inlet face and an outlet face and a second filter media pack with an inlet face and an outlet face. US 3,966,646 discloses a method of manufacturing a body comprising the steps of forming a single strip of material with at least one plain region and at least one region of protrusions, such as corrugations, bumps or ridges.

Although z-flow media has many benefits, a need remains for improved filter performance, including filter media, media packs, and elements with reduced pressure loss across the element and/or improved particulate loading capacity.

### Summary

The invention relates to an air filtration media pack according to claim 1, a tilter element according to claim 12 and a method according to claim 14. The present application relates to filter media, filter media packs, filter elements, and air cleaners with two or more different media configurations, plus methods of making and using the media, media packs, filter elements, and air cleaners. The different media configurations can be, for example, different flute geometries in a z-flow filter media. The use of two or more different media configurations allows for improved performance, such as reduced pressure loss and/or increased loading capacity, relative to the use of a single media configuration

In example implementations two different media sections are combined into a single filter element, the two media sections having distinct pressure loss and loading properties. The distinction in pressure loss and loading properties between the media sections will generally be less than normal variation observed within filter elements from manufacturing variations, thus the difference will be at least 5 percent for a specific measured and varied parameter, and more typically at least 10 percent for a specific measured and varied parameter.

In an example configuration the first media section has a lower initial pressure loss than the second media section, while the second media section has a greater dust holding capacity than the first media section. In certain constructions the combination of these two media sections results in an element that has better performance than would be achieved with a media pack made only of one of these media alone, and better than would be achieved by just averaging the performance of each media sections. Thus, the hybrid filter element can (for example) demonstrate reduced initial pressure loss but also increased loading relative to media packs made with just one media or the other media.

Flute height, for example, can be varied so that individual layers of media have varied height, multiple layers of media have different heights, or larger sections of media have different heights.

Flow through these various layers and sections of media is typically a parallel flow. As used herein, the term "parallel" refers to a construction in which a fluid stream to be filtered diverges into the first and second plurality of flutes, and then typically converges again later. As such, "parallel" does not require that the flutes themselves be arranged in a geometrically parallel configuration (although they often are), but rather that the pluralities of flutes exhibit parallel flow with regard to one another. Thus, "parallel" flow is used in contrast to "serial" flow (where the flow is from one plurality of flutes and then into a second plurality of flutes in serial flow).

Constructions made in accordance with the disclosures herein can, for example, allow for improvements in both pressure loss and dust loading relative to filter media packs and elements that are made of a single media type. In addition, in some implementations it is possible to add more media into a prescribed volume without significantly increasing initial pressure loss. As such, a media construction can be created that has a relatively low initial pressure loss while still having a relatively high dust loading capacity. This improvement can be obtained by combining a first media that has a low initial pressure loss (but low dust loading capacity) with a second media that has a higher initial pressure loss (and higher dust loading capacity). The resulting combined media demonstrates, in some embodiments, an initial pressure loss similar to the first media but with the dust loading of the second media.

It is also possible to utilize the benefits of the hybrid media constructions to get more media in a specific volume, as well as to load more dust on a given media surface area. Thus, it is possible to get improved media performance while having less media.

In example constructions the first media pack can comprise, for example, approximately 10, 20, 30, 40, 50, 60, 70, 80, or 90 percent of the media pack (measured by pack volume); and the second media pack can comprise, for example, approximately 10, 20, 30, 40, 50, 60, 70, 80 or 90 percent of the media pack (measured by pack volume). As used herein, pack volume means the total volume occupied by the media pack when measuring that area contained within the perimeter of the pack. Thus, pack volume can include the media itself, as well as the open upstream volume into which dust can load and the downstream volume through which the filtered air travels out of the media pack. Alternatively, the first plurality of flutes comprises from 20 to 40 percent of the pack volume, and the second plurality of flutes comprises from 60 to 80 percent of the pack volume. In other implementations the first plurality of flutes comprises from 40 to 60 percent of the pack volume, and the second plurality of flutes comprises from 60 to 40 percent of the pack volume. In yet another implementation the first plurality of flutes comprises from 60 to 90 percent of the inlet face of the media pack, and the second plurality of flutes comprises from 40 to 10 percent of the pack volume.

In such example constructions the first media pack can be, for example, approximately 10, 20, 30, 40, 50, 60, 70, 80, or 90 percent of the media pack (measured by media surface area); and the second media can be, for example, approximately 10, 20, 30, 40, 50, 60, 70, 80 or 90 percent of the media pack (measured by media surface area). As used herein, pack surface area means the total surface area of the media in each media pack if the media pack was taken apart and the media stretched out.. Alternatively, the first plurality of flutes comprises from 20 to 40 percent of the media surface area, and the second plurality of flutes comprises from 60 to 80 percent of the media surface area. In other implementations the first plurality of flutes comprises from 40 to 60 percent of the inlet face of media surface area, and the second plurality of flutes comprises from 60 to 40 percent of the media surface area pack. In yet another implementation the first plurality of flutes comprises from 60 to 90 percent of the media surface area, and the second plurality of flutes comprises from 40 to 10 percent of the media surface area. It is also possible to characterize media packs by the portion of the inlet face occupied by a specific media type. In some implementations the first media pack (comprising a first plurality of flutes) comprises from 10 to 90 percent of the inlet face of the media pack, such as 10, 20, 30, 40, 50, 60, 70, 80 or 90 percent of the inlet face of the media pack; and the second media pack (comprising a second plurality of flutes) comprises from 90 to 10 percent of the inlet face of the media pack, such as 90, 80, 70, 60, 50, 40, 30, 20 or 10 percent of the inlet face of the media pack. Alternatively, the first plurality of flutes comprises from 20 to 40 percent of the inlet face of the media pack, and the second plurality of flutes comprises from 60 to 80 percent of the inlet face of the media pack. In other implementations the first plurality of flutes comprises from 40 to 60 percent of the inlet face of the media pack, and the second plurality of flutes comprises from 60 to 40 percent of the inlet face of the media pack. In yet another implementation the first plurality of flutes comprises from 60 to 90 percent of the inlet face of the media pack, and the second plurality of flutes comprises from 40 to 10 percent of the inlet face of the media pack.

Another embodiment of the filtration media pack includes a third plurality of flutes arranged in parallel flow with the first and second plurality of flutes; wherein the first, second, and third plurality of flutes exhibit regular repeating differences in flute shape, flute size, flute height, flute width, cross-flute area, or filter media. Optionally each of the first, second, and third pluralities of flutes is arranged in a separate plurality of layers. It will be understood that in some implementations more than three pluralities of flutes arranged in parallel flow, wherein each of the plurality of flutes exhibit differences in flute shape, flute size, flute height, flute width, cross-flute area, or filter media. Frequently these differences in flute properties are repeating, often regularly repeating.

In an example construction having three types of flutes, the first, second, and third flutes can be selected such that the first plurality of flutes comprises 20 to 50 percent of the volume of the media pack, such as 20, 30, 40, or 50 percent the volume of media pack; the second plurality of flutes comprises 20 to 50 percent the volume of the pack, such as 20, 30, 40 or 50 percent of the volume of media pack; and the third plurality of flutes comprises 20 to 50 percent of the volume of the media pack, such as 20, 30, 40 or 50 percent of the volume of the media pack.

In an example construction having three types of flutes, the first, second, and third flutes can be selected such that the first plurality of flutes comprises 20 to 50 percent of the media surface area of the media pack, such as 20, 30, 40, or 50 percent of the media surface area of the filter media pack; the second plurality of flutes comprises 20 to 50 percent of the media surface area of the media pack, such as 20, 30, 40 or 50 percent of the media surface area of the media pack; and the third plurality of flutes comprises 20 to 50 percent of the media surface area of the media pack, such as 20, 30, 40 or 50 percent of the surface area of the media pack.

In an example construction having three types of flutes, the first, second, and third flutes can be selected such that the first plurality of flutes comprises 20 to 50 percent of the inlet face of the media pack, such as 20, 30, 40, or 50 percent of the inlet face of the filter media pack; the second plurality of flutes comprises 20 to 50 percent of the inlet face of the media pack, such as 20, 30, 40 or 50 percent of the inlet face of the filter media pack; and the third plurality of flutes comprises 20 to 50 percent of inlet face of the media pack, such as 20, 30, 40 or 50 percent of the inlet face of the media pack.

An example air filtration media pack has a plurality of layers of fluted z-flow media. In some constructions each layer of media has a facing sheet and a fluted sheet. Each fluted sheet includes a plurality of flutes which exhibit regular repeating differences in flute shape, flute size, flute height, flute width, cross-flute area, or filter media. These pluralities of flutes are arranged and a parallel flow pattern. The facing sheet can be, for example, constructed of the same material forming the fluted sheet, or can be constructed of a different material. The facing sheet is typically not fluted, but can be fluted in some constructions. The facing sheet can possess filtration properties, or be a non-filtration material without filtration properties (such as a spacer material). Also, the facing sheet can cover all or only a portion of each fluted sheet. The facing sheet can be continuous or segmented such that separate facing sheet segments are positioned against each facing sheet.

The different media types in the plurality of flutes are in parallel flow to one another. As noted above, as used herein the term "parallel" refers to a construction in which a fluid stream to be filters diverges into the first and second plurality of flutes, and then typically converges again later. As such, "parallel" does not require that the flutes themselves be arranged in a geometrically parallel configuration (although they often are), but rather that the pluralities of flutes have generally parallel flow with regard to one another. Thus, "parallel" flow is used in contrast to "serial" flow where the flow is from one plurality of flutes and then into a second plurality of flutes. It will be understood that, in some constructions such as a wrapped construction, the fluid flow may be between adjacent sections of filter media.

The media can be arranged within a media pack in a variety of constructions, including alternating single face layers (for example, construction A/B/C/A/B/C ... where A, B, and C each refer to distinct flute types, and "/" denotes separate layers. Thus, A/B/C/A/B/C . . . . refers to a fluted media with a first layer of flutes having configuration A, followed by second layer of flutes having configuration B, and third layer of flutes having configuration C. This order is repeated for layers four, five and six in the A/B/C/A/B/C arrangement. This A/B/C arrangement can be repeated numerous times to create the full media pack.

The use of the terms "A", "B", and "C" flutes is meant to represent medias with different properties. For example, flutes of type A may have a greater height than flutes of type B or type C; or flutes of type B may have a greater or lesser width than flutes of type A or type C; or flutes of type A can be formed of media with greater efficiency and/or permeability than flutes of type B or C.

It will also be understood that the media can be arranged in constructions where layers of similar flutes are grouped together, such as a media pack with the construction A/A/A/A/B/B/B/C/C/C. In this construction there are four layers with A flutes, three layers with B flutes, and three layers with C flutes. Each of the layers with types of flutes A, B, and C are grouped together. The different media areas containing different types of flutes can directly contact one another, such as by being arranged in a stacked or wrap configuration. They also be arranged so that the different media areas are separated by a divider or other component.

It will also be understood that there can be many more than three or four layers of similar flutes grouped together depending upon flute size, media pack size, etc. A media pack may be constructed with many layers of each media, such as (for example), ten, twenty, thirty or forty grouped layers A flutes; or ten, twenty, thirty or forty grouped layers of B flutes, etc.

In some constructions flutes can be varied repeatedly within a layer as well as between layers. For example, a media pack having the construction ABC. . . /DEF. . . /ABC. .. /DEF... IABC... /DEF . . . has layers with repeating flutes A, flutes B and flutes C alternating with layers having flutes D, flutes E, and flutes F. Other examples, without limitation, include a media pack with AB..../CDEF... /AB... /CDEF; a media pack with A... /BCD.../A... BCD....

Using more than one flute configuration within a given filter media pack or air cleaner can provide various benefits, including having a lower initial restriction of one flute configuration and the dust holding capacity of a second flute configuration. Thus, elements formed of the combined media can outperform elements formed solely of one flute configuration. In this manner combining different types and styles of flute geometries allows improvements in one or more of cost, initial pressure loss, loading capacity, or other aspects of filter performance.

In some constructions the relative position of the media is determined by desired element properties. For example, higher permeability media can be arranged in areas of a filter element that has highest face velocity due to configuration of an air cleaner in which it is placed so as to reduce initial restriction. In other embodiments, higher efficiency media is arranged in areas with the highest face velocity to improve initial efficiency of the filter element.

This summary is an overview of some of the teachings of the present application and is not intended to be an exclusive or exhaustive treatment of the present subject matter. Further details are found in the detailed description and appended claims. Other aspects will be apparent to persons skilled in the art upon reading and understanding the following detailed description and viewing the drawings that form a part thereof, each of which is not to be taken in a limiting sense. The scope herein is defined by the appended claims.

### Brief Description of the Figures

Aspects may be more completely understood in connection with the following figures, in which:
FIG. 1 is perspective view of an example filter element made in accordance with example embodiment.
FIG. 2A is an enlarged schematic, cross-sectional view of a section of filter media.
FIG. 2B is a partial, enlarged cross-sectional view of a sheet of fluted media along with top and bottom facing sheets.
FIG. 3 is a top schematic view of an example filter media pack, showing a wound configuration with two types of filter media according to the invention.
FIG. 4 is a top schematic view of an example filter media pack, showing a wound configuration with three types of filter media according to the invention.
FIG. 5 is a top schematic view of an example filter media pack, showing a stacked configuration of filter media not according to the invention.
FIG. 6 is a top schematic view of an example filter media pack, showing a stacked configuration of filter media not according to the invention.
FIG. 7 is a top schematic view of an example filter media pack, showing a stacked configuration of filter media not according to the invention.
FIG. 8 is a top schematic view of an example filter media pack, showing a stacked configuration with three types of filter media not according to the invention.
FIG. 9 is a top schematic view of an example filter media pack, showing a stacked configuration with two types of filter media not according to the invention.
FIG. 10 is a top schematic view of an example filter media pack, showing a stacked configuration with two types of filter media not according to the invention.
FIG. 11 is a top schematic view of an example filter media pack, showing a stacked configuration with two types of filter media according to the invention.
FIG. 12 is a top schematic view of an example filter media pack, showing a stacked configuration with two types of filter media according to the invention.
FIG. 13 is a top schematic view of an example filter media pack, showing a stacked configuration with two types of filter media according to the invention.
FIG. 14 is a top schematic view of an example filter media pack, showing a stacked configuration with three types of filter media according to the invention.
FIG. 15 is a top schematic view of an example filter media pack, showing a wound configuration with two types of filter media not according to the invention.
FIG. 16 is a top schematic view of an example filter media pack, showing a wound configuration with three types of filter media not according to the invention.
FIG. 17 is a top schematic view of an example filter media pack, showing a stacked configuration with three types of filter media not according to the invention.
FIG. 18 is a top schematic view of an example filter media pack, showing a stacked configuration with two types of filter media not according to the invention.
FIG. 19 is a top schematic view of an example filter media pack, showing a stacked configuration with two types of filter media not according to the invention.
FIG. 20 is a top schematic view of an example filter media pack, showing a stacked configuration with two types of filter media according to the invention.
FIG. 21 is a top schematic view of an example filter media pack, showing a stacked configuration with two types of filter media according to the invention.
FIG. 22 is a top schematic view of an example filter media pack, showing a stacked configuration with two types of filter media according to the invention.
FIG. 23 is a top schematic view of an example filter media pack, showing a stacked configuration with three types of filter media according to the invention.
FIG. 24A is a top schematic view of an example filter media pack, showing a wound configuration with two types of filter media not according to the invention.
FIG. 24B is a top schematic view of an example filter media pack, showing a wound configuration with two types of filter media not according to the invention.
FIG. 25A is a top schematic view of an example filter media pack, showing a wound configuration with three types of filter media not according to the invention.
FIG. 25B is a top schematic view of an example filter media pack, showing a wound configuration with three types of filter media not according to the invention.
FIG. 26A is a top schematic view of an example filter media pack, showing a wound configuration with two types of filter media not according to the invention.
FIG. 26B is a top schematic view of an example filter media pack, showing a wound configuration with two types of filter media not according to the invention.
FIG. 27 shows performance results from comparative testing of filter elements with different media types.
FIGS. 28A and 28B show performance results, including dust loading and pressure loss, for various media constructions
FIGS. 29A and 29B show performance results, including dust loading and pressure loss, for various media constructions
FIGS. 30A and 30B show performance results, including dust loading and pressure loss, for various media constructions

### Detailed Description

1 inch= 2,54 cm
1 inch of water= 248,84 Pa

The present application is directed, in an example embodiment, to an air filtration media pack comprising a plurality of layers of fluted media, each layer comprising a first plurality of flutes and a second plurality of flutes, the first and second plurality of flutes being arranged in a parallel flow configuration; wherein the first and second plurality of flutes exhibit differences in flute shape, flute size, flute height, flute width, cross-flute area, or filter media.

These pluralities of flutes are arranged in parallel flow. As noted above, as used in this context, the term "parallel" refers to a construction in which a fluid stream to be filtered diverges into the first and second plurality of flutes, and then typically converges again later. As such, "parallel" does not require that the flutes themselves be arranged in a geometrically parallel configuration (although they often are), but rather that the pluralities of flutes exhibit parallel flow with regard to one another. Thus, "parallel" flow is used in contrast to "serial" flow (where the flow is from one plurality of flutes and then into a second plurality of flutes in serial flow).

According to the invention, the first plurality of flutes is arranged in a first plurality of layers, and the second plurality of flutes is arranged in a second plurality of layers of the fluted media.

Disclosed herein, two different media packs are combined into a single filter element, the two media packs having distinct pressure loss and loading properties. In an example the first media pack has a lower initial pressure loss than the second media pack, while the second media pack has a greater dust holding capacity than the first media pack. In certain constructions the combination of these two media results in an element that has better performance than would be achieved with either media alone, and better than would be achieved by just averaging the performance of each media pack. Thus, the hybrid filter element can (for example) demonstrate reduced initial pressure flow but also increased loading.

In example constructions the first media pack can be, for example, approximately 20, 30, 40, or 50 percent of the media pack (measured by pack volume); and the second media pack can be, for example, approximately 20, 30, 40, or 50 percent of the media pack (measured by pack volume). As used herein, pack volume means the total volume occupied by the media pack when measuring that area contained within the perimeter of the pack. Thus, pack volume can include the media itself, as well as the open volume into which dust can load.

In such example constructions the first media pack can be, for example, approximately 20, 30, 40, or 50 percent of the media pack (measured by media surface area); and the second media pack can be, for example, approximately 20, 30, 40, or 50 percent of the media pack (measured by media surface area). As used herein, pack surface area means the total surface area of the media in each media pack if the media pack was taken apart and the media stretched out.

In some implementations the first plurality of flutes comprises from 10 to 90 percent of the inlet face of the media pack, and the second plurality of flutes comprises from 90 to 10 percent of the inlet face of the media pack. Alternatively, the first plurality of flutes comprises from 20 to 40 percent of the inlet face of the media pack, and the second plurality of flutes comprises from 60 to 80 percent of the inlet face of the media pack. In other implementations the first plurality of flutes comprises from 40 to 60 percent of the inlet face of the media pack, and the second plurality of flutes comprises from 60 to 40 percent of the inlet face of the media pack. In yet another implementation the first plurality of flutes comprises from 60 to 90 percent of the inlet face of the media pack, and the second plurality of flutes comprises from 40 to 10 percent of the inlet face of the media pack.

Another embodiment of the filtration media pack includes a third plurality of flutes arranged in parallel flow with the first and second plurality of flutes; wherein the first, second, and third plurality of flutes exhibit regular repeating differences in flute shape, flute size, flute height, flute width, cross-flute area, or filter media. Optionally each of the first, second, and third pluralities of flutes is arranged in a separate plurality of layers. It will be understood that in some implementations more than three pluralities of flutes arranged in parallel flow, wherein each of the plurality of flutes exhibit regular repeating differences in flute shape, flute size, flute height, flute width, cross-flute area, or filter media.

In an example construction having three types of flutes, the first, second, and third flutes can be selected such that the first plurality of flutes comprises 30 to 50 percent of the inlet face of the media pack; the second plurality of flutes comprises 20 to 40 percent of the inlet face of the media pack; and the third plurality of flutes comprises 20 to 40 percent of inlet face of the media pack.

In another example construction having three types of flutes, the first, second, and third flutes can be selected such that the first plurality of flutes comprises 50 to 70 percent of the inlet face of the media pack; the second plurality of flutes comprises 10 to 30 percent of the inlet face of the media pack; and the third plurality of flutes comprises 10 to 30 percent of inlet face of the media pack.

In come implementations the plurality of layers of single facer media are arranged in a wound configuration, while in other implementations the facer media is arranged in a stacked configuration.

In some configurations the first and second plurality of layers of single facer media are arranged in an intermixed configuration with one more layers of the first plurality of single facer media alternating with one or more layers of the second plurality of single facer. In example implementations with at least three kinds of sing facer media, the first and second plurality of layers of single facer media are arranged in an intermixed configuration with one more layers of the first plurality of single facer media alternating with one or more layers of the second plurality of single facer media and one or more layers of the third plurality of single facer media. Also, when three types of media are used, the first, second, and third plurality of layers of single facer media can be arranged in an intermixed configuration with one more layers of the first plurality of single facer media alternating with one or more layers of the second plurality of single facer media and one or more layers of the third plurality of single facer media. In some implementations, more than three types of filter media are used, and these different types of media can be incorporated either in an intermixed manner or a manner in an aggregated manner in which the different types of media are collected together without intermixing between types of media. Alternatively, the media can be aggregated into smaller groups and then intermixed, such as by having five layers of one media and three layers of a different media.

Now, in reference to the drawings, further aspects of the filter media, media packs, and elements will be identified.

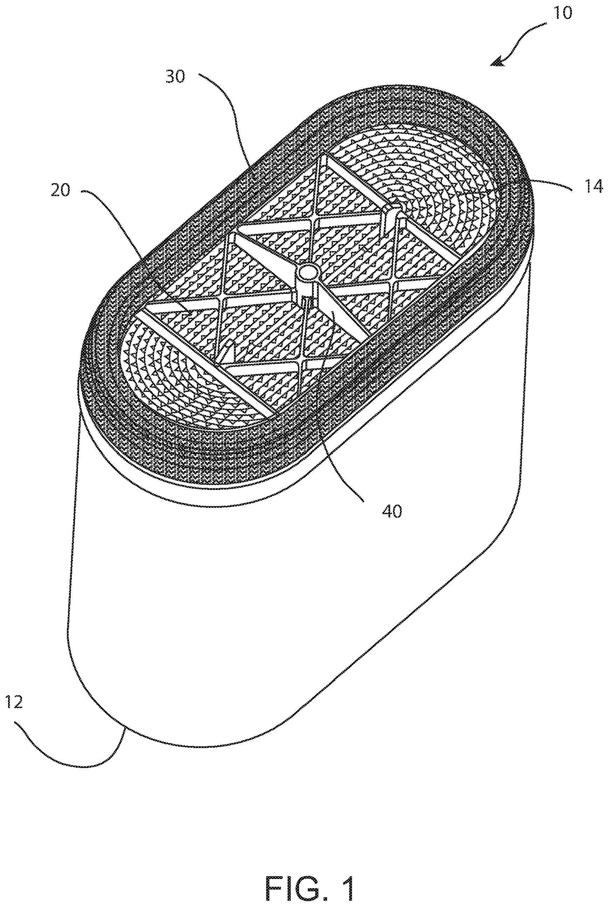

First, regarding FIG. 1, a perspective view of an example filter element 10 is shown. The example filter element 10 includes an inlet 12, an outlet 14 on the opposite side of the element 10 from the inlet 12, and wound z-flow media 20 within the element 10. A seal 30 is shown surrounding the inlet 12, and a support frame 40 is depicted. It will be appreciated as well that the filtration element can have flow opposite to that shown in FIG. 1, such that the inlet 12 and outlet 14 are reversed.

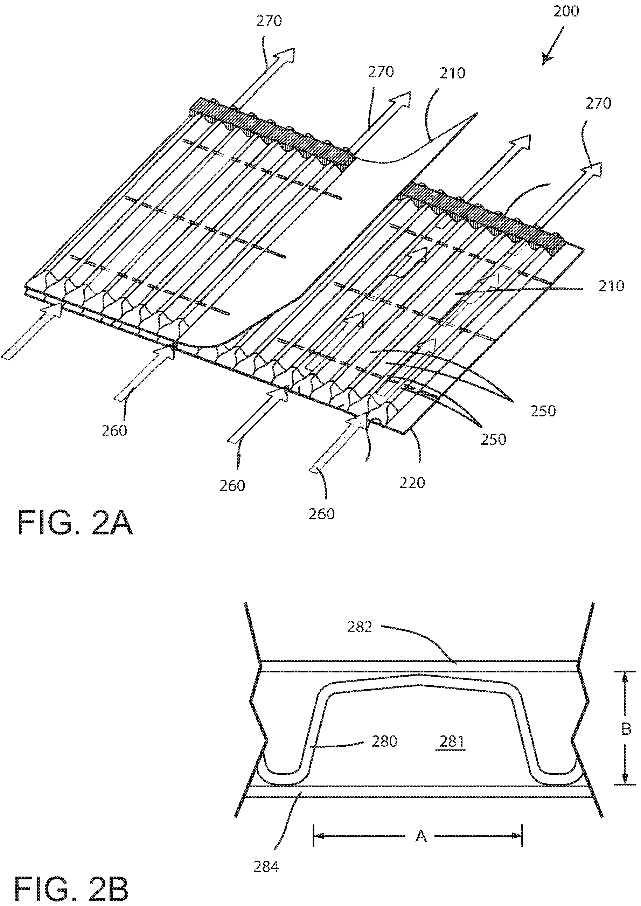

FIG. 2A is an enlarged schematic, cross-sectional view of a section of single facer filter media 200 suitable for use in filter media packs and filter elements as described herein. The single facer media 200 includes fluted sheet 210, along with a top facer sheet 220 and a bottom facer sheet 230. The fluted sheet 210 includes a plurality of flutes 250. A fluid stream to be filtered, such as air for an internal combustion engine, enters flutes 250 along flow path 260, and then travels along the flutes until passing through the filter media and out a different flute along fluid flow path 270. This fluid flow through fluted media packs is described in, for example, U.S. Patent No. 7,99,702 to Rocklitz.

FIG. 2B is an enlarged front view of a sheet of fluted media with a fluted sheet 280, top facer sheet 282 and facer media 284 constructed and arranged according to an embodiment of the invention is shown with dimensions of example flutes. The fluted sheet 280 includes flutes 281. The flutes 281 in the depicted embodiment have a width A measured from a first one peak to adjacent peak. In example embodiments width A is from .75 to . 125 inches, optionally from .5 to .25 inches, and optionally from .45 to .3 inches. The flutes 281 also have a height B measured from adjacent same size peaks. The flute 281 has an area between fluted sheet 281 and facing sheet 282, measured perpendicular to the flute length. The area can vary depending along the length of the flute when the height, width or shape of the flute varies along its length, such as when the flute tapers.

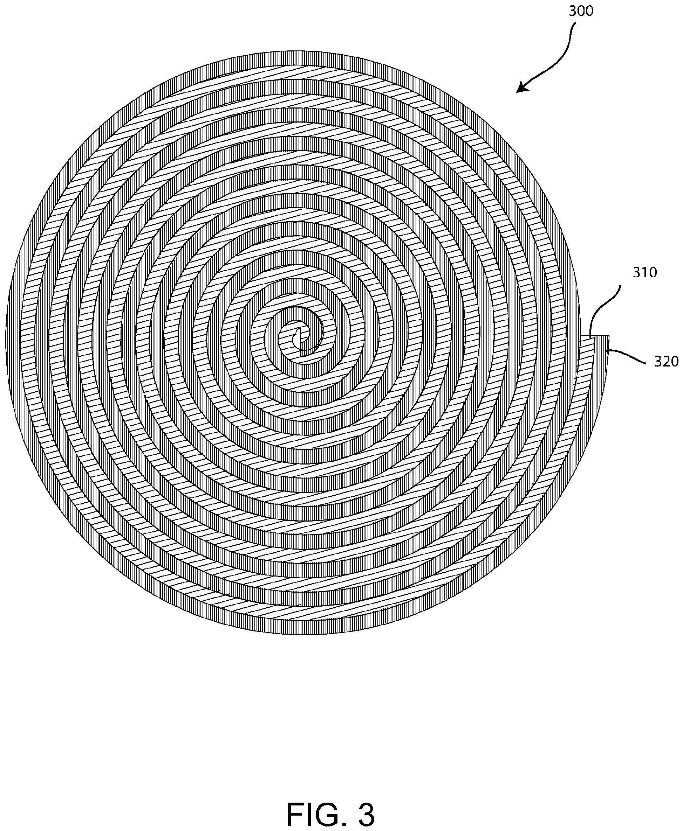

FIG. 3 is a top schematic view of an example filter media pack 300 for use in a filter element. The filter media pack 300 has two types of filter media: first media 310 and second media 320. The media is shown in a wound configuration with the two types of filter media intermixed and overlapping. The filter media 310 and 320 is shown in schematic form, without showing the actual flutes of the media. The filter media pack 300 can typically be formed by winding of different types of media simultaneously around a central axis. In this example embodiment the ratio of face area of media 310 to 320 is approximately 1:1.

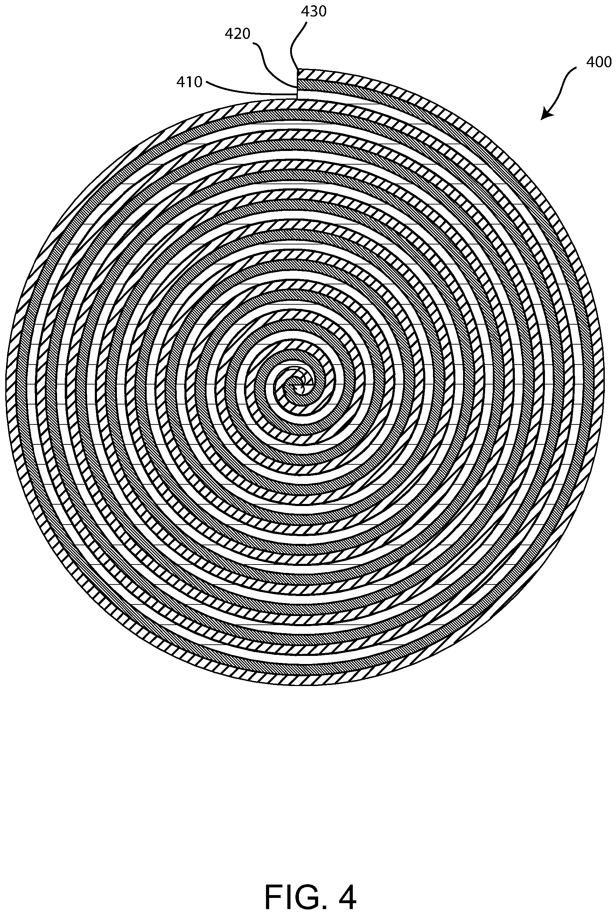

FIG. 4 is a top schematic view of an example filter media pack 400, showing a wound configuration with three types of filter media. The filter media pack 400 has three types of filter media: first media 410, a second media 420, and a third media 430. The media is shown in wound configuration with the three types of filter media intermixed and overlapping. The filter media 410, 420 and 430 is shown in schematic form, without showing the actual flutes of the media. The filter media pack 430 can typically be formed by winding three different types of media simultaneously around a central axis. In this example embodiment the ratio of face area of media 410 to 420 to 430 is approximately 1:1:1.

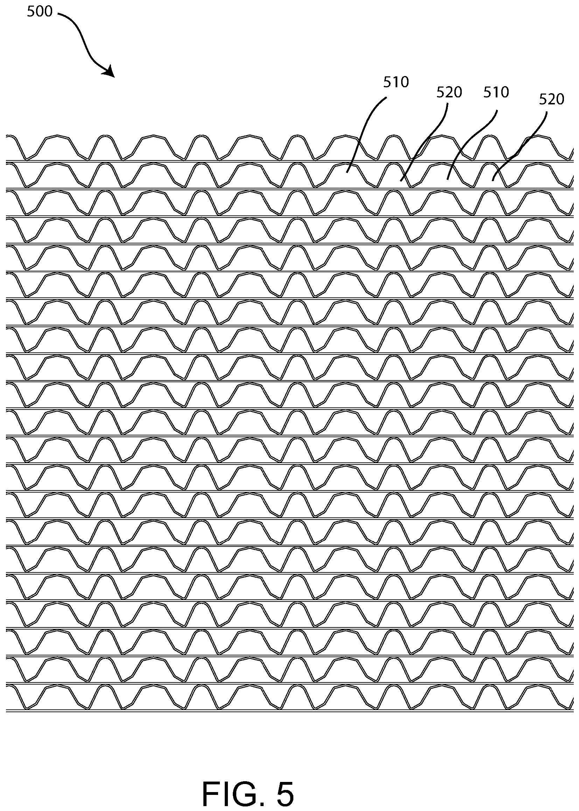

FIG. 5 is a top schematic view of an example filter media pack 500, showing a stacked configuration with two types of flutes. The filter media pack 500 has two types of flutes: first flutes 510 and second flutes 520.

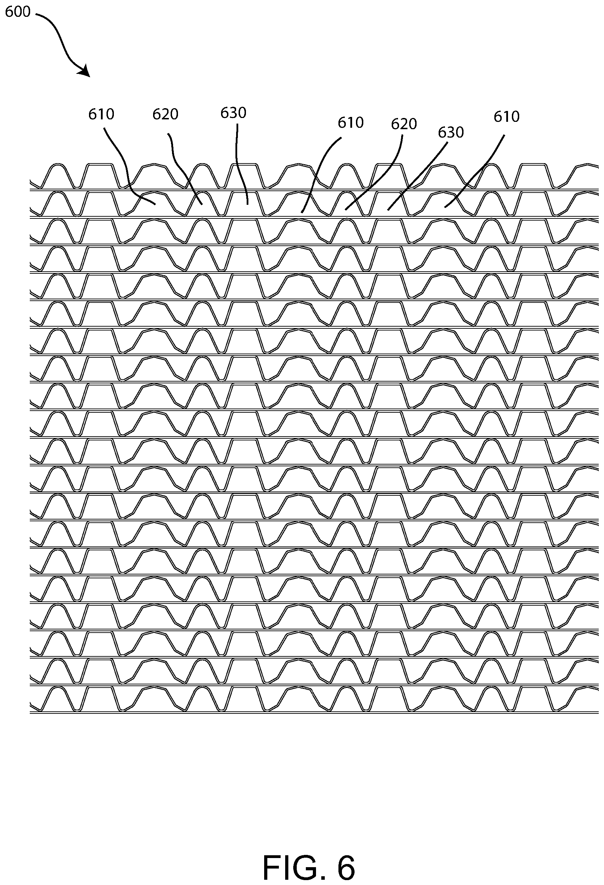

FIG. 6 is a top schematic view of an example filter media pack 600, showing a stacked configuration with different types of filter media. The filter media pack 600 has three types of flutes: first flutes 610, second flutes 620, and third flutes 630.

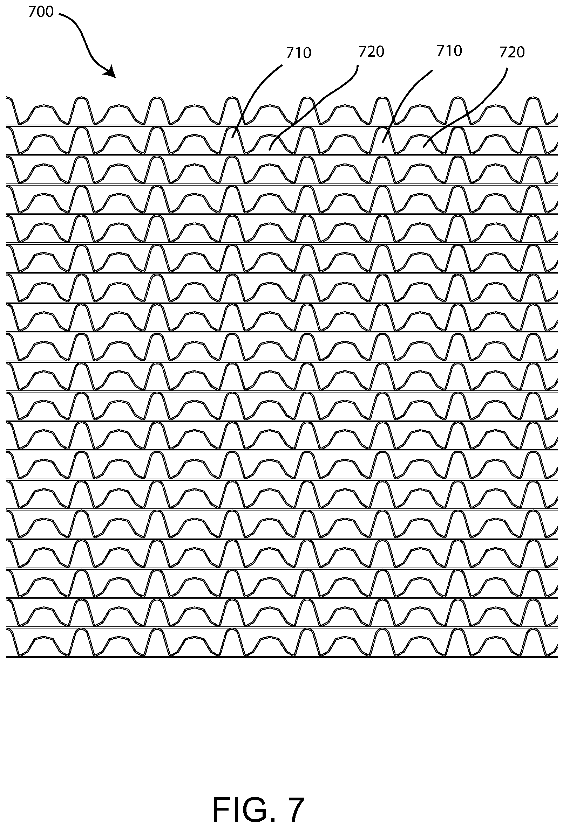

FIG. 7 is a top schematic view of an example filter media pack 700, showing a stacked configuration with different types of flutes. The filter media pack 710 has two types of flutes: first flutes 710 and second flutes 720.

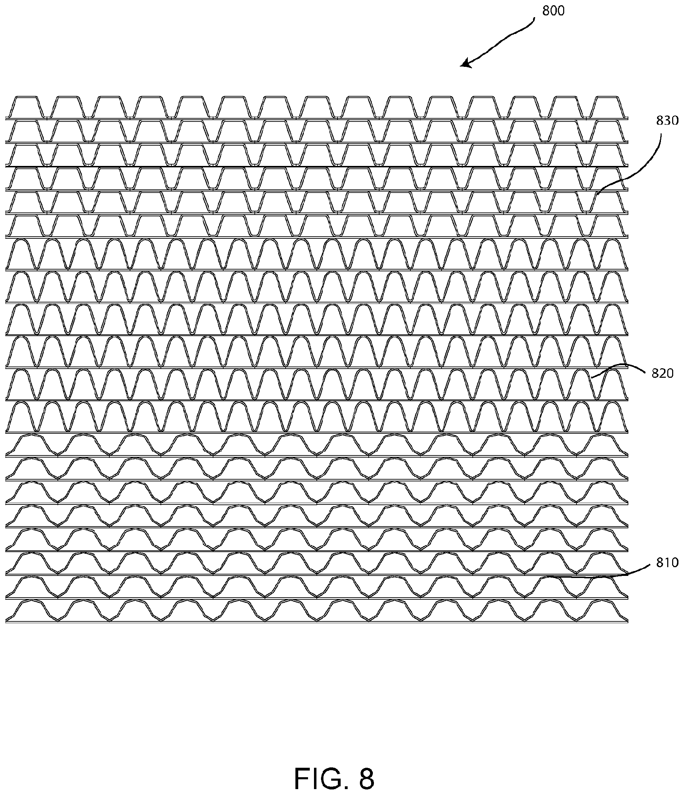

FIG. 8 is a top, schematic view of an example filter media pack 800, showing a stacked configuration with three types of filter media. The three types of filter media are first media 810, a second media 820, and a third media 830. The media is shown in a stacked configuration with the three types of filter media being segregated by media type rather than intermixed. In this example embodiment the ratio of filter media 810 to 820 to 830 is approximately 4:3:3, based upon pack entrance area.

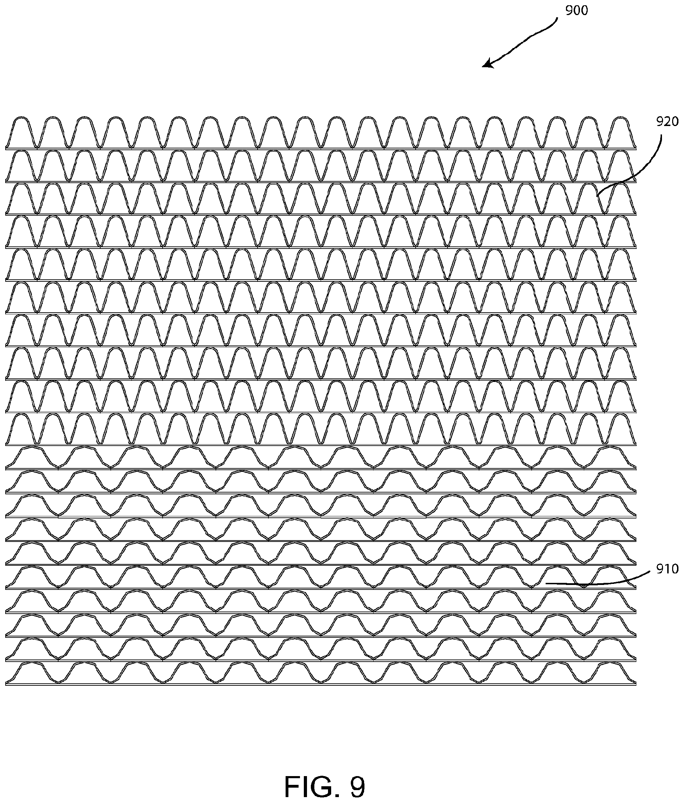

FIG. 9 is a top schematic view of an example filter media pack 900, showing a stacked configuration with two types of filter media: first media 910 and second media 920. The media is shown in stacked configuration with the two types of filter media separate rather than intermixed. In this example embodiment the ratio of filter media 910 to 920 is approximately 1:1, based upon total pack entrance area.

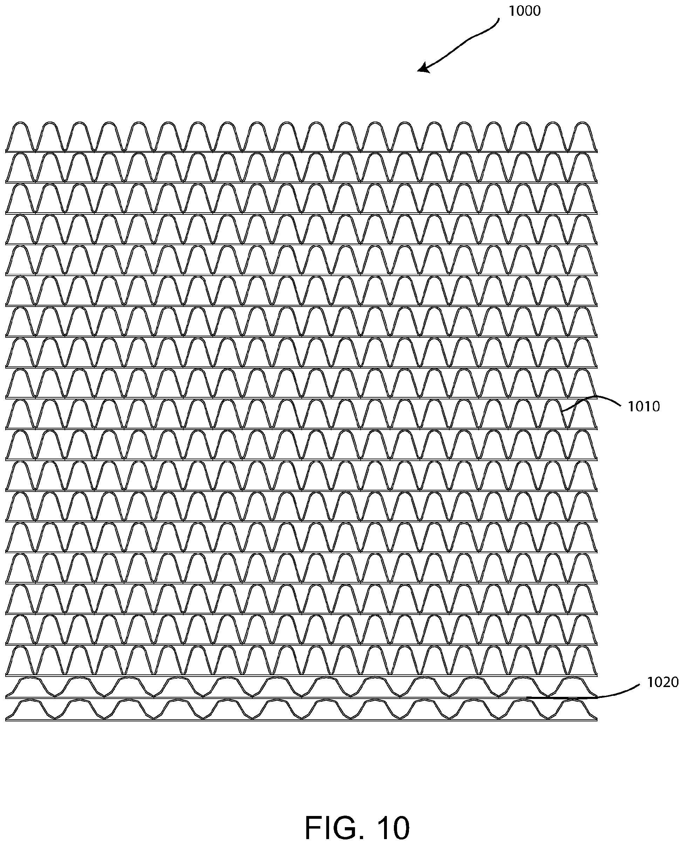

FIG. 10 is a top schematic view of an example filter media pack 1000, showing a stacked configuration with two types of filter media: first media 1010 and second media 1020. The media is shown in stacked configuration. In this example embodiment the ratio of filter media 1010 to 1020 is approximately 9:1, based upon total pack entrance area.

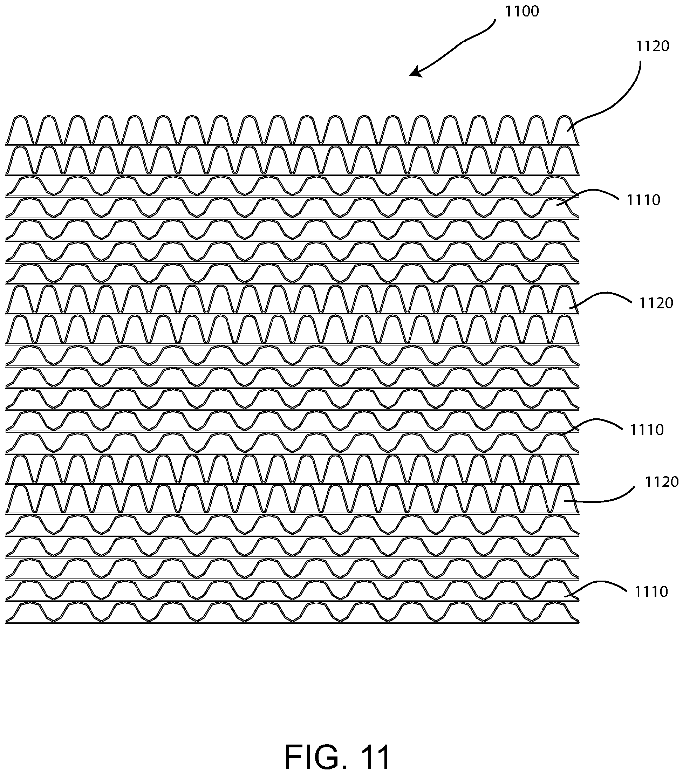

FIG. 11 is a top schematic view of an example filter media pack, showing a stacked configuration with two types of filter media. The filter media pack 1100 has two types of filter media: first media 1110 and second media 1120. The media 1110 and 1120 is stacked with five layers of filter media 1110 alternating with two layers of media 1120.

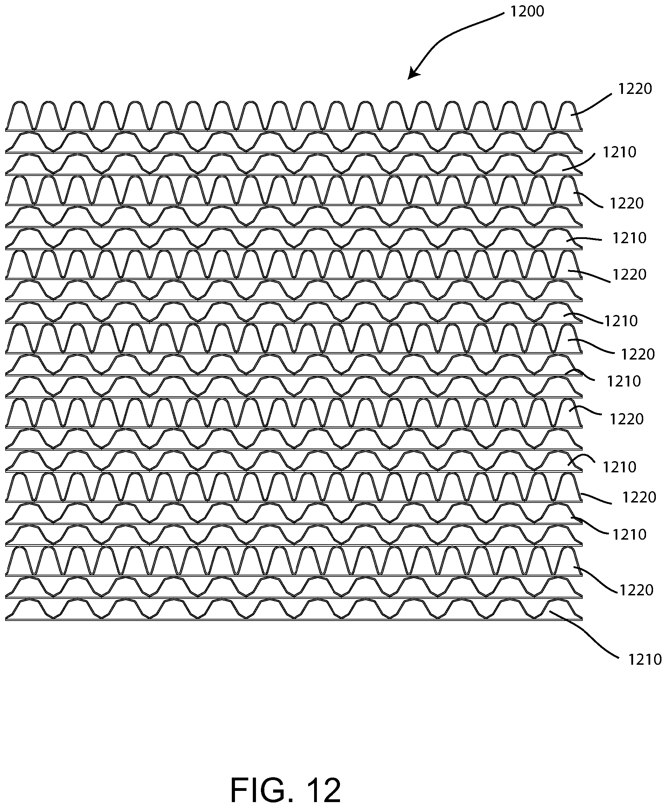

FIG. 12 is a top schematic view of an example filter media pack, showing a stacked configuration with two types of filter media. The filter media pack 1200 has two types of filter media: first media 1210 and second media 1220. The media is shown in stacked configuration. The media 1210 and 1220 is stacked with two layers of filter media 1210 alternating with one layer of media 1220.

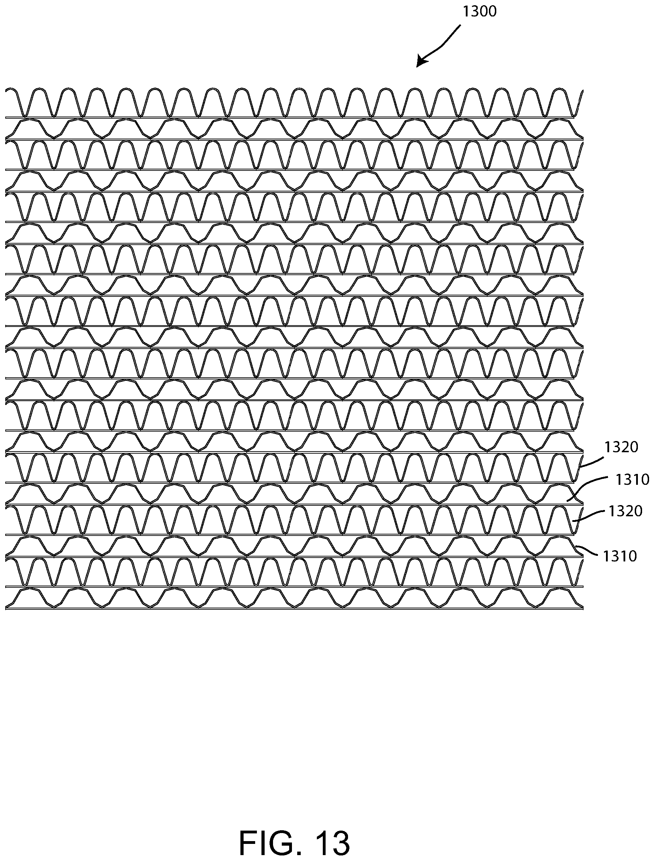

FIG. 13 is a top schematic view of an example filter media pack 1300, showing a stacked configuration with two types of filter media. The filter media pack 1300 has two types of filter media: first media 1310 and second media 1320. The media 1310 and 1320 are stacked, with one layer of filter media 1310 alternating with one layer of media 1320.

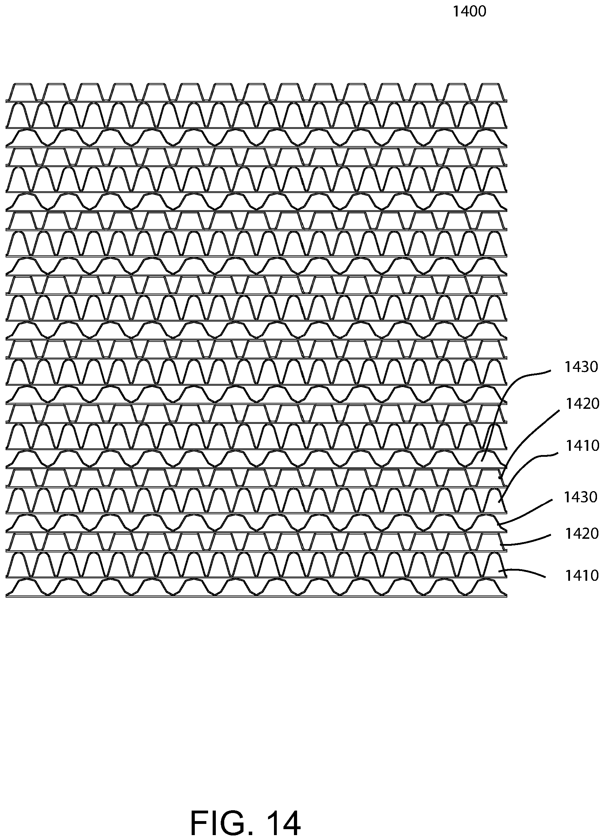

FIG. 14 is a top schematic view of an example filter media pack 1400. The filter media pack 1400 has three types of filter media: first media 1410, second media 1420, and third media 1430. The media layers 1410, 1420 and 1430 are arranged in an alternating stack

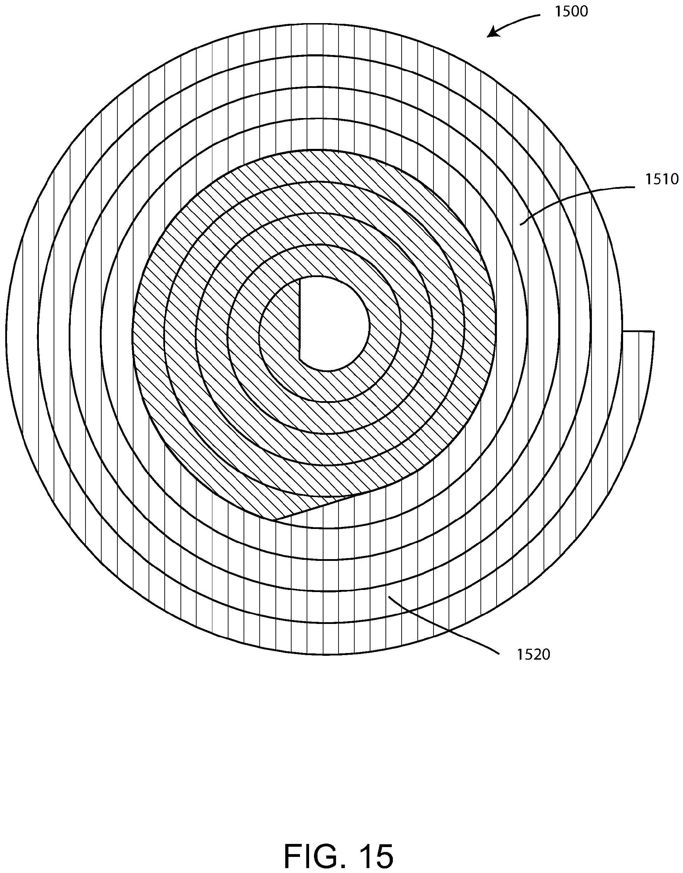

FIG. 15 is a top schematic view of an example filter media pack 1500, showing a wound configuration with two types of filter media 1510 and 1520. The media is wound with the first media 1510 on the inside and the second media 1520 on the outside, the first and second medias 1510, 1520 spliced together.

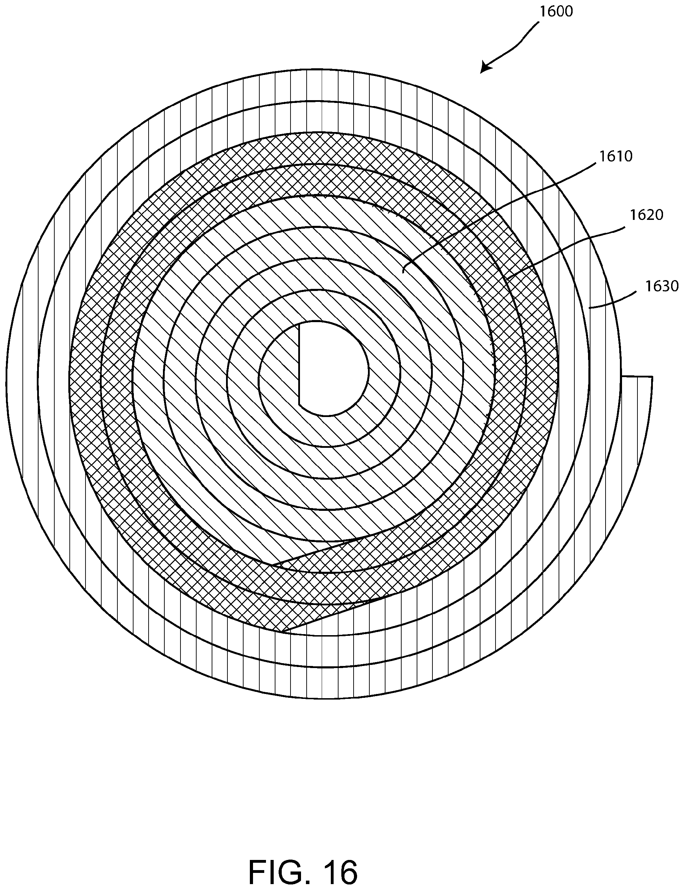

FIG. 16 is a top schematic view of an example filter media pack 1600, showing a wound configuration with three types of filter media 1610, 1620, and 1630. The media is wound with a first media 1610 on the inside, the second media 1620 in the middle, and the third media 1630 on the outside. The first and second medias 1610, 1620 are spliced together, as are the second and third medias 1620, 1630.

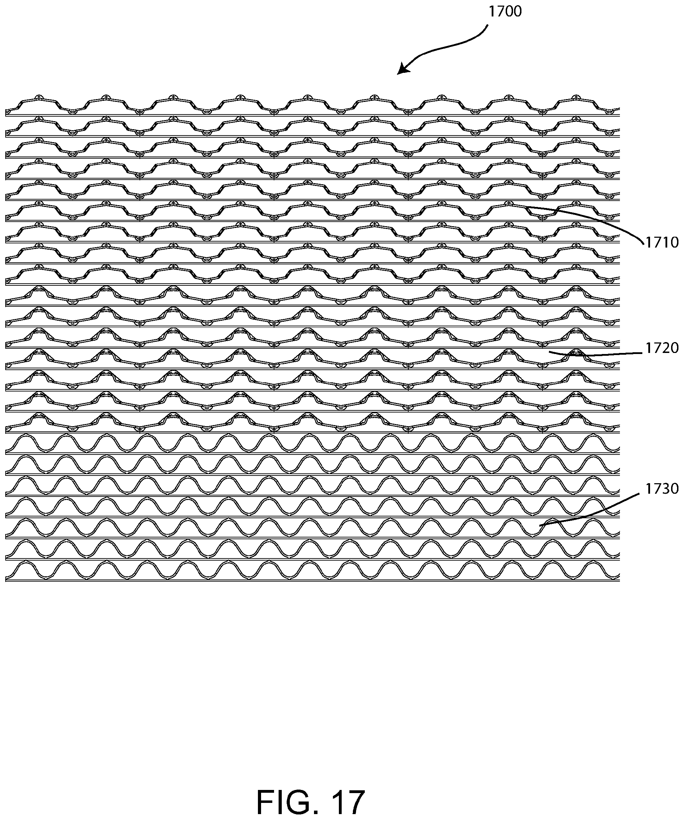

FIG. 17 is a top, partial schematic view of an example filter media pack 1700, showing a stacked configuration with three types of filter media. The three types of filter media are first media 1710, second media 1720, and third media 1730. The media is shown in a stacked configuration with the three types of filter media being segregated by media type rather than intermixed. In this example embodiment the ratio of filter media 1710 to 1720 to 1730 is approximately 4:3:3, based upon total pack entrance area.

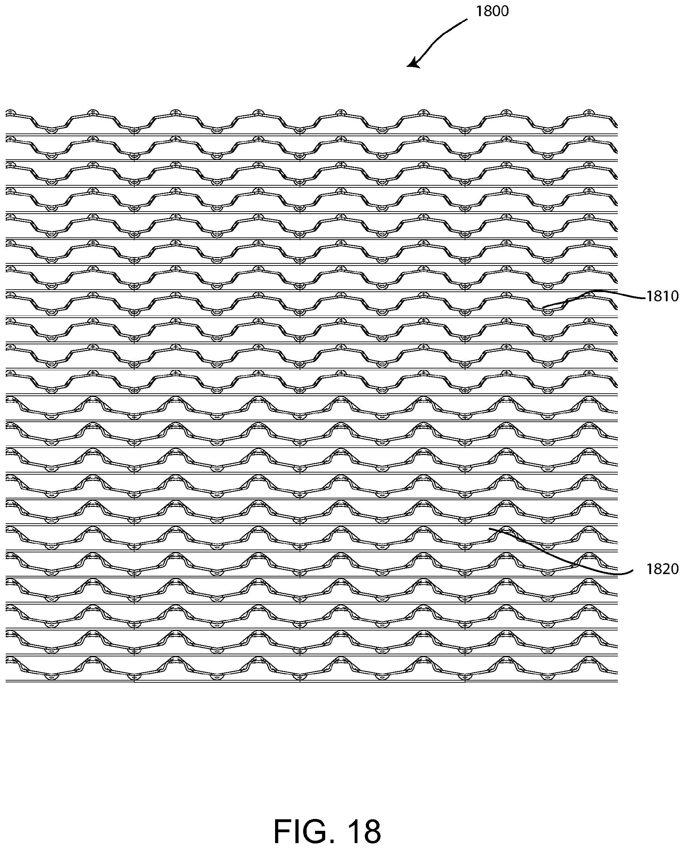

FIG. 18 is a top schematic view of an example filter media pack 1800, showing a stacked configuration with two types of filter media: first media 1810 and second media 1820. The media is shown in a stacked configuration with the two types of filter media segregated. In this example embodiment the ratio of filter media 1810 to 1820 is approximately 1:1, based upon total pack entrance area.

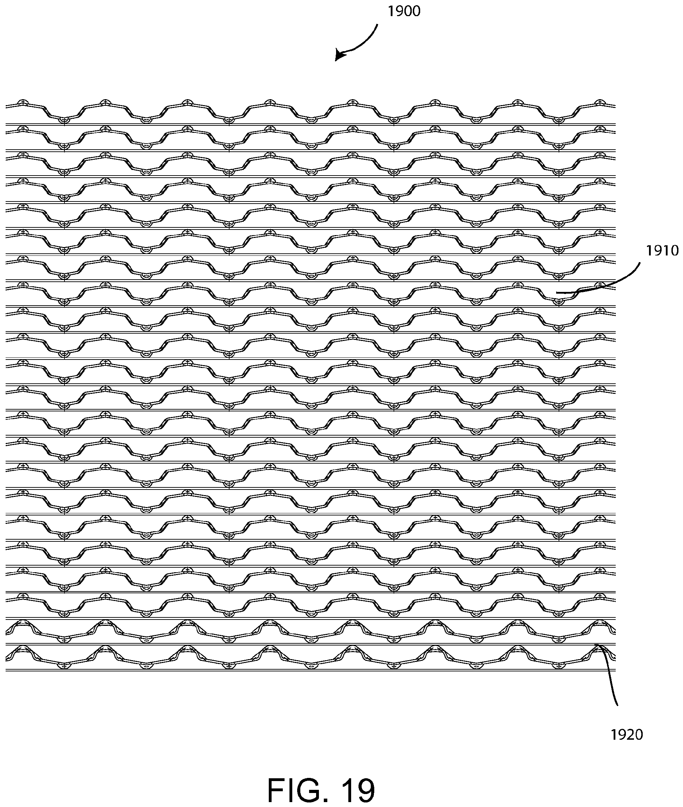

FIG. 19 is a top schematic view of an example filter media pack 1900, showing a stacked configuration with two types of filter media. The filter media pack 1900 has two types of filter media: first media 1910 and second media 1920. The media is shown in stacked configuration. In this example embodiment the ratio of filter media 1910 to 1920 is approximately 9: 1, based upon total pack entrance area.

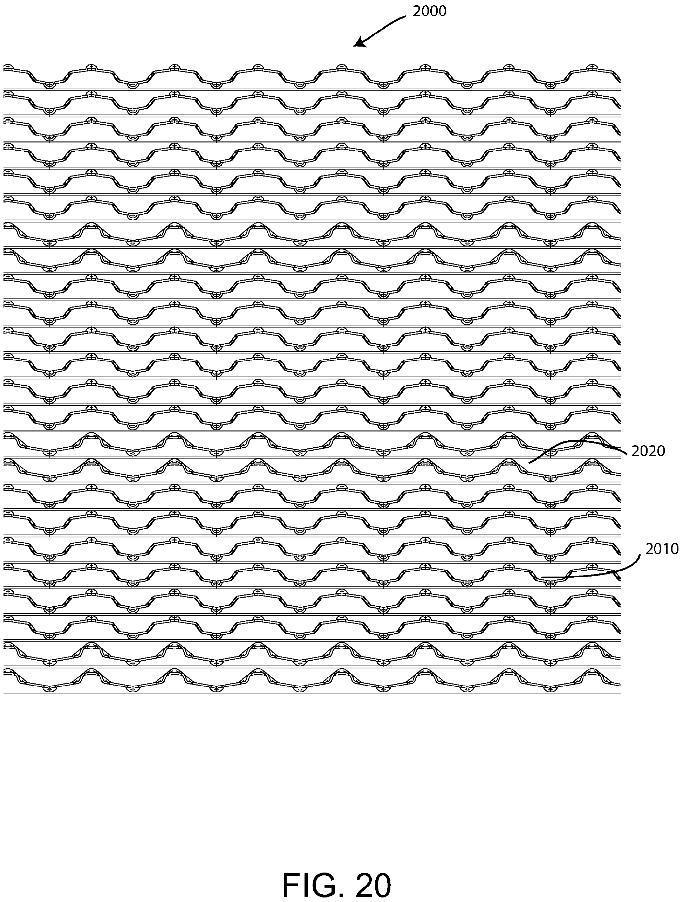

FIG. 20 is a top schematic view of an example filter media pack 2000, showing a stacked configuration with two types of filter media. The filter media pack 2000 has two types of filter media: first media 2010 and second media 2020. The media pack 2000 has six layers of filter media 2010 alternating with two layers of media 2020.

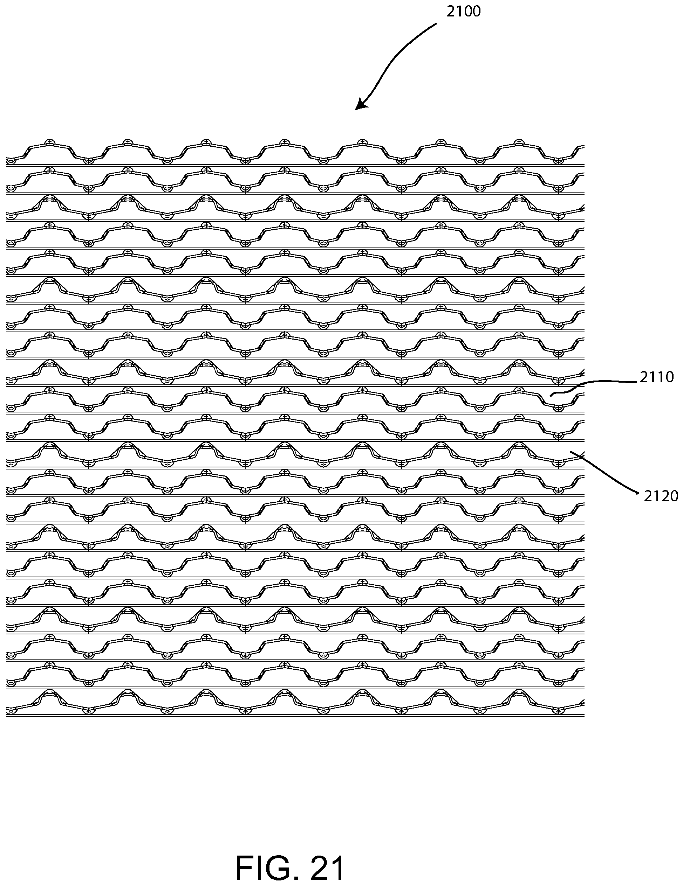

FIG. 21 is a top schematic view of an example filter media pack 2100, showing a stacked configuration with two types of filter media. The filter media pack 2100 has two types of filter media: first media 2110 and second media 2120. The media pack 2100 has two layers of filter media 2110 alternating with one layer of media 2120.

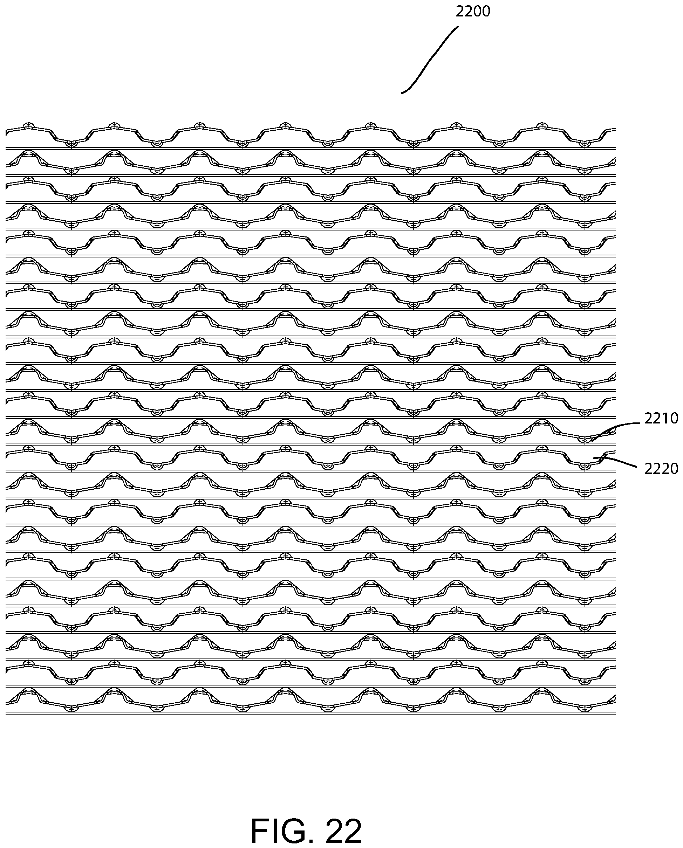

FIG. 22 is a top, partial schematic view of an example filter media pack 2200, showing a stacked configuration with two types of filter media. The two types of filter media are first media 2210 and a second media 2220. The media is shown in a stacked configuration with the two types of filter media intermixed.

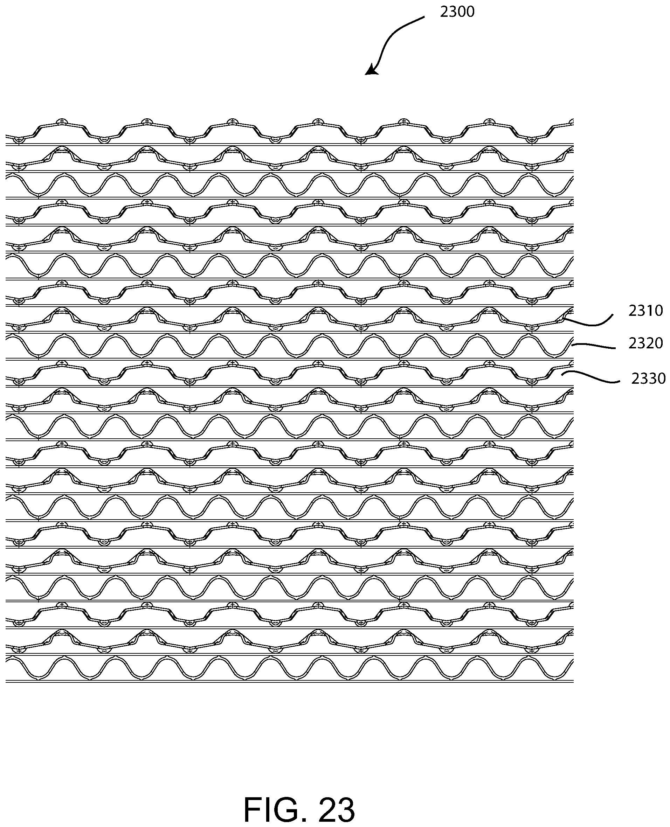

FIG. 23 is a top, partial schematic view of an example filter media pack 2300, showing a stacked configuration with three types of filter media. The three types of filter media are first media 2310, a second media 2320, and a third media 2330. The media is shown in a stacked configuration with the three types of filter media intermixed.

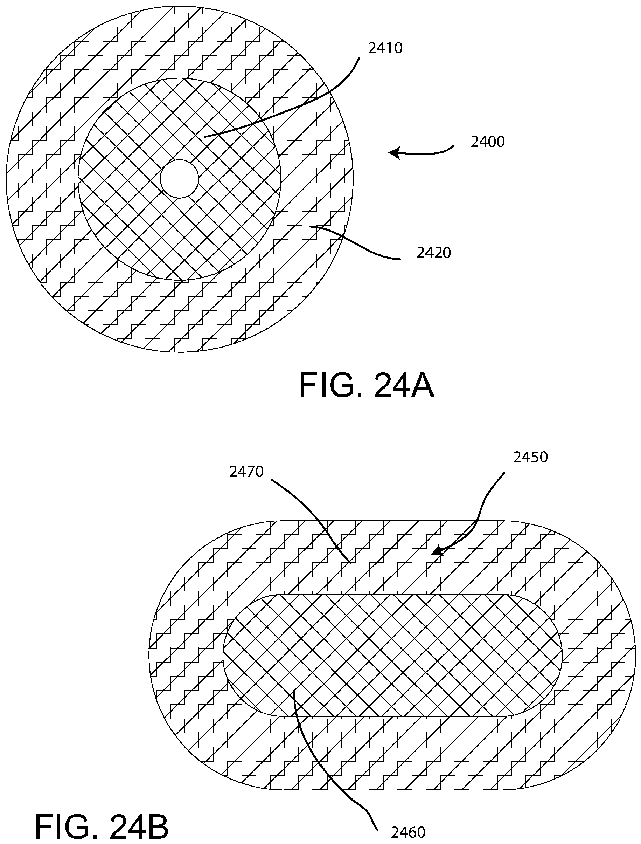

FIG. 24A is a top schematic view of an example filter media pack 2400, showing a wound configuration with two types of filter media: first media 2410, and second media 2420. The media is shown in a wound configuration with the two types of media distinct from one another by having filter media 2420 laid down first, and then filter media 2420 laid down second. In this example embodiment the ratio of pack entrance area.2420 to 2410 is approximately 2:1. This construction can be created by, for example, wrapping a first singleface media type for a period, cutting that web and splicing a second singleface media type to the end region of the first single face media type, continuing the wrapping process, and repeating for as many singleface media types as desired. Alternatively, winding of each singleface media type can be done separately, and the sections can be brought together and sealed as a secondary process

FIG. 24B is a top schematic view of an example filter media pack 2450, showing a wound configuration with two types of flutes forming the filter media. The filter media pack 2540 has two types of flutes: first media 2460, and second media 2470. The media is shown in wound configuration with the two types of flutes separated from one another. In this example embodiment the ratio of pack entrance area 2470 to 2460 is approximately 2:1

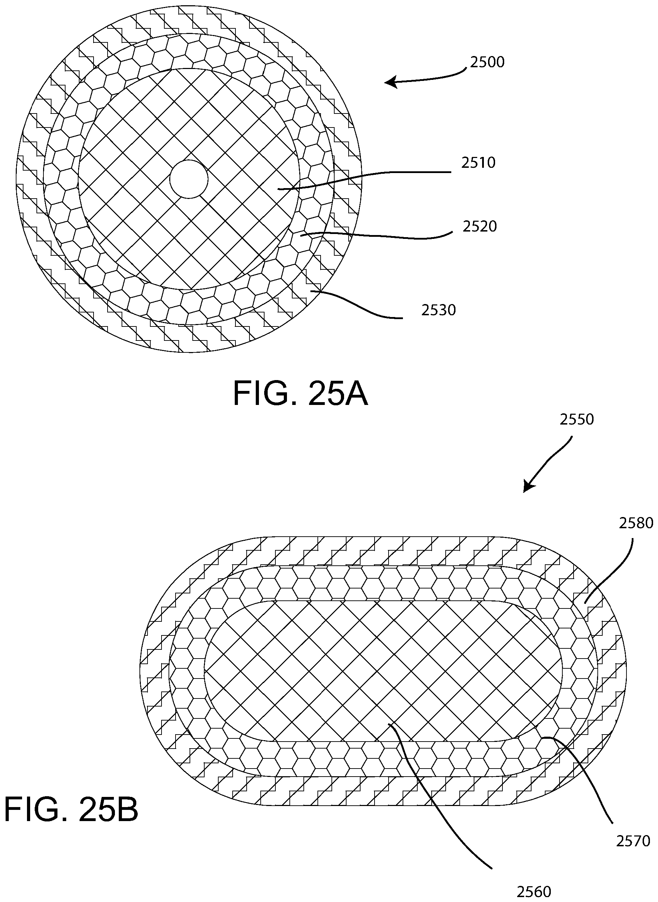

FIG. 25A is a top schematic view of an example filter media pack 2500, showing a wound configuration with three types of filter media: first media 2510, second media 2520, and third media 2530. The media is shown in a wound configuration with the media separated from one another by having filter media 2520 laid down first, and then second media 2520 laid down on top of media 2510, and third media 2530 is laid down on top of media 2520. In this example embodiment the ratio of pack entrance area 2510 to 2520 to 2530 is approximately 4:3:3.

FIG. 25B is a top schematic view of an example filter media pack 2550, showing a wound configuration with three types of filter media. The filter media pack 2550 has first media 2560, second media 2670 and third media 2680. The media is shown in wound configuration with the three types of media separated from one another. In this example embodiment the ratio of pack entrance area.2560 to 2570 to 2580 is approximately 4:3:3.

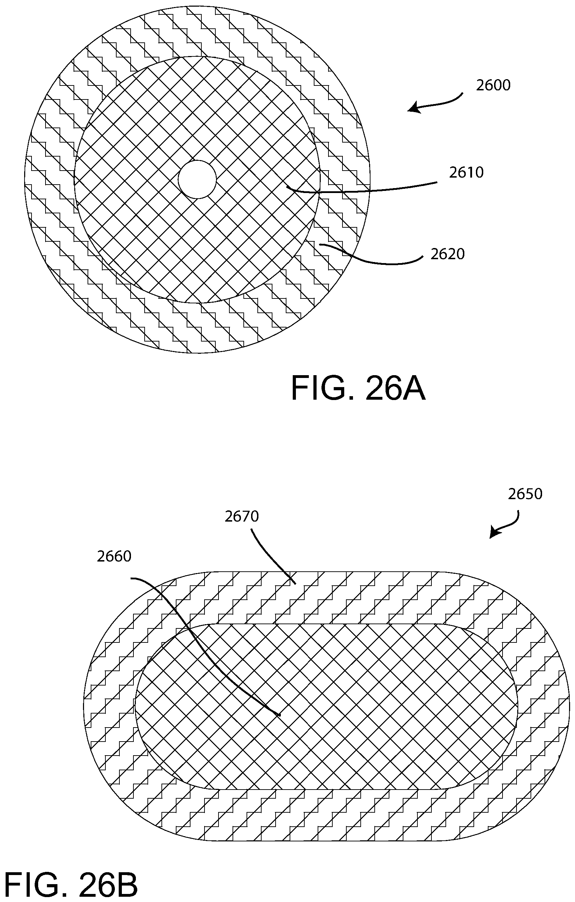

FIG. 26A is a top schematic view of an example filter media pack 2600, showing a wound configuration with two types of filter media. The filter media pack 2600 has two types of filter media: first media 2610, and second media 2620. The media is shown in a wound configuration with the two types of media separate on one another by having filter media 2620 laid down first, and then filter media 2620 laid down on top of media 2610. In this example embodiment the ratio of pack entrance area.2610 to 2620 is approximately 1:1.

FIG. 26B is a top schematic view of an example filter media pack 2650, showing a wound configuration with two types of filter media. The filter media pack 2540 has two types of filter media: first media 2660, and second media 2670. The media is shown in wound configuration with the two types of media separated from one another. In this example embodiment the ratio of pack entrance area.2660 to 2670 is approximately 1:1.

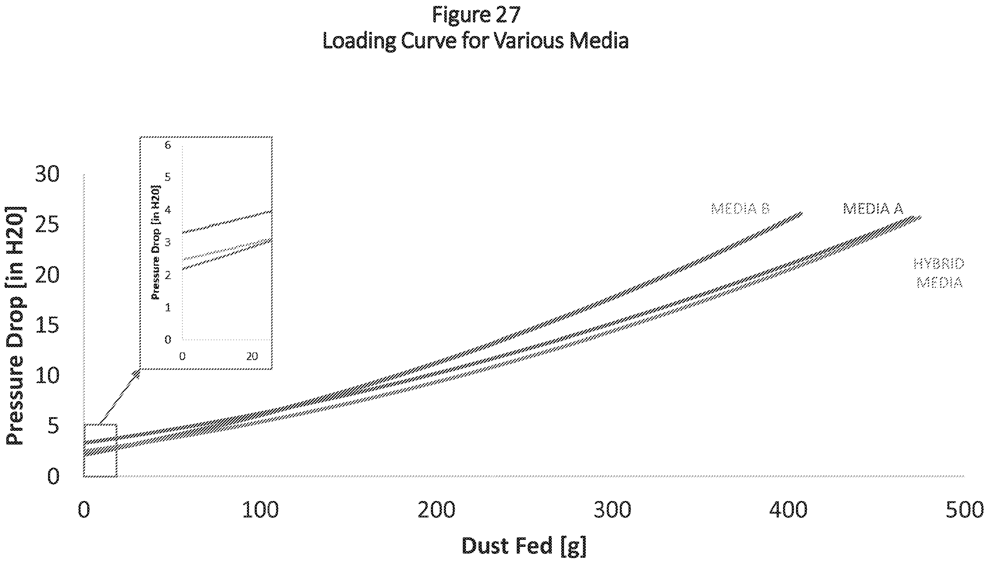

Aspects may be better understood with reference to the following example, in which Element A, Element B, and Element C were compared to one another. Element A was composed entirely of Media A with flutes having a width of approximately 10.7 millimeters and height of 3.2 millimeters and a tapered cross-sectional area. Element B was composed entirely of Media B with flutes having a width of approximately 8.0 millimeters and a height of approximately 2.7 millimeters and a tapered area. The flute density per square centimeter was approximately 2.8 for Element A and 4.4 for Element B. Element C was composed of 50 percent by volume with Media A, and 50 percent by volume of Media B to form a Hybrid Media. Figure 27 shows a loading curve for filter elements made using Media A, Media B, and the Hybrid Media. The loading curve shows the pressure loss of the filter elements as the grams of dust increases from zero to up to less than 500 grams. As shown in Figure 27, Media B and the hybrid media started with very similar restriction levels (approximately 2.5 inches of H₂0), while Media A had a higher initial pressure loss, which is approximately 3.2 inches of H₂0. As dust begins to load the pressure loss across all elements increases, however Media A and the Hybrid Media have a slower increase in pressure loss than Media B, with the pressure loss of Media A and Media B crossing (or being the same) at about 125 grams of dust. Thus, the Hybrid Media tracked closely with Media B when dust loading was just starting, and then tracked closely with Media A as the dust loading increased to higher levels. In other words, the hybrid media had initial restriction similar to Media B, but loading similar to Media A.

In order to further test improved filter performance, a test bench was set up with a two-duct system having 5 to 9 cubic meters per minute of air flow, configured to measure pressure loss, as well as outlet restriction values. Relative performance of media elements formed using combinations of filter medias was investigated by constructing various filter element designs. The elements were formed with z-flow media arranged in a stacked configuration. The elements each had a 150 by 150 millimeter inlet face and a 150 by 150 millimeter outlet face and were 150 millimeters deep. Filter elements were made with two types of media: Media A and Media B. Media A and Media B had media flute constructions consistent with those shown in U.S. Patent No. 9,623,362, entitled Filtration Media Pack, Filter Elements, and Air Filtration Media to inventor Scott M. Brown and assigned to Donaldson Company, Inc. Media A and B were both primarily cellulosic media. Media A had a flute height of about 0.092 inch, flute width of about 0.314 inch, and flute length of about 150 millimeters (including flute plugs). Media B had a flute height of about 0.140 inch, flute width of about 0.430 inch, and flute length of about 150 millimeters (including flute plugs). A first type of "segmented" media pack was assembled packs of Media A and Media B located next to one another in parallel flow. A second type of "layered" media pack included alternating sheets of Media A and Media B.

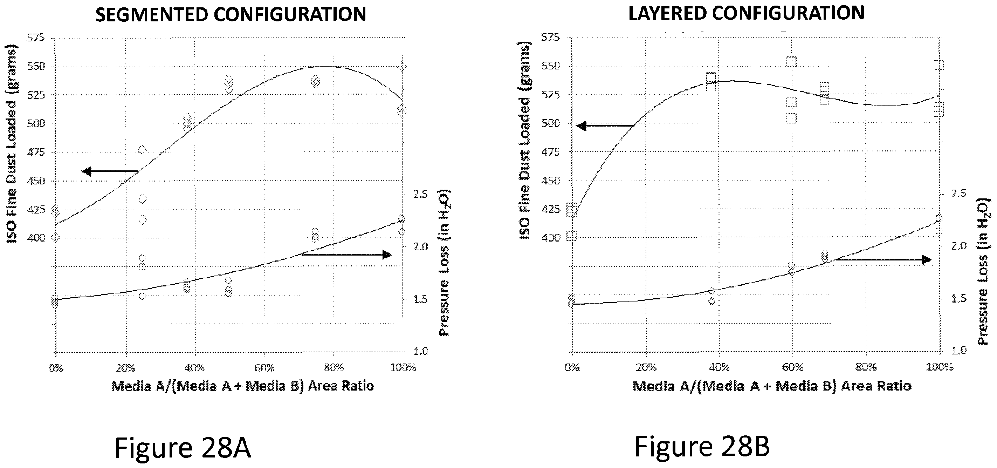

Figures 28A to 30B show performance results, including dust loading and pressure loss, for various media constructions. Figures 28A, 29A and 30A show results for a segmented configuration (Media A was grouped together and all of Media B was grouped together); and Figures 28B, 29B, and 30B show results for a layered configuration (in which at least some of the Media A and Media layers were intermixed). Thus, the media constructions include either Media A, Media B, or various percentages by volume of Media A and Media B. Media on the far left of each graph, denoted as 0%, has no Media A and is thus entirely Media B. Media on the far right, denoted as 100%, have only Media A and thus no Media B. The Y axis contains both ISO fine dust loading measured in grams, as well as pressure loss measured in inches of water.

Figures 28A and 28B shows performance results, including dust loading and pressure loss, for various media constructions at a cube flow rate of 5.83 cubic meters per minute. From Figure 28A and 28B it will be observed that the best performance, specifically the highest dust loading, was achieved with a hybrid media: the hybrid media pack containing both Media A and Media B had higher dust loading capacity than either Media A or Media B alone.

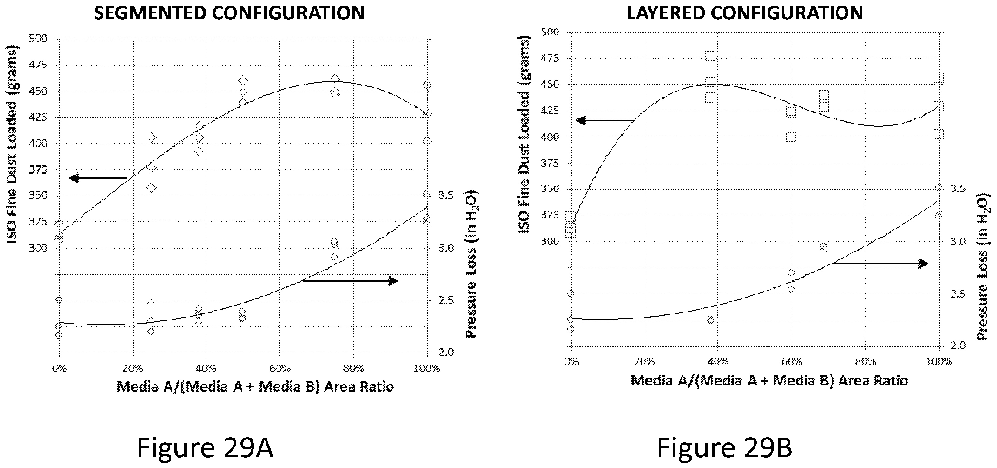

Figures 29A and 29B show performance results, including dust loading and pressure loss, for various media constructions at a cube flow rate of 7.37 cubic meters per minute. Again, as with Figures 29A and 29B, the best performance was with a hybrid media of both Media A and Media B.

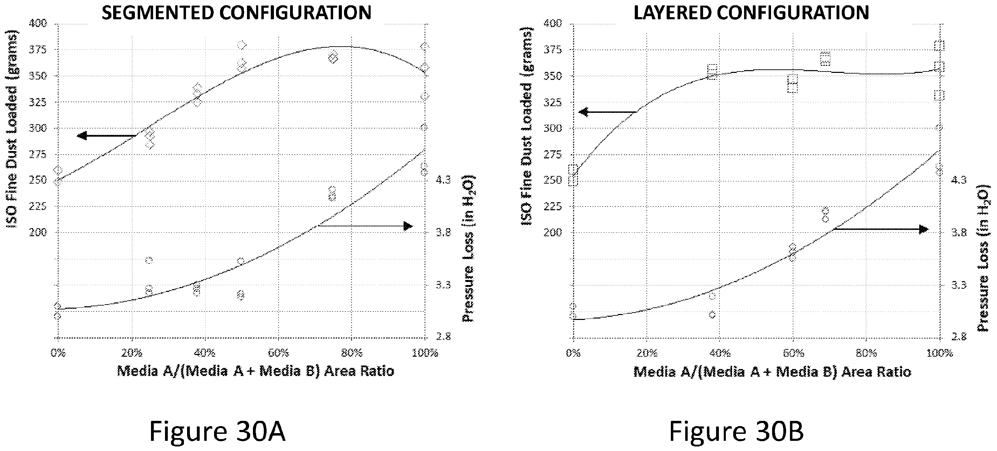

Figures 30A and 30B show performance results, including dust loading and pressure loss, for various media constructions at a cube flow rate of 8.78 cubic meters per minute. From Figure 30A and 30B it will be observed that the best performance, specifically the highest dust loading, was again achieved with a hybrid media.

It should be noted that, as used in this specification and the appended claims, the singular forms "a," "an," and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

It should also be noted that, as used in this specification and the appended claims, the phrase "configured" describes a system, apparatus, or other structure that is constructed or configured to perform a particular task or adopt a particular configuration to. The phrase "configured" can be used interchangeably with other similar phrases such as arranged and configured, constructed and arranged, constructed, manufactured and arranged, and the like.

## Claims

1. An air filtration media pack (1300, 1400, 2200, 2300) comprising:
a plurality of layers of fluted single facer media (200, 1310, 1410, 2210, 2310), the single face media (200, 1310, 1410, 2210, 2310) includes a fluted sheet (210) and a bottom facer sheet (230),
a first plurality of flutes (250) arranged in the fluted sheet (210) of a first plurality of layers of fluted single facer media (200, 1310, 1410, 2210, 2310) forming a first media section, and a second plurality of flutes (250) arranged in the fluted sheet (210) of a second plurality of layers of fluted single facer media (200, 1320, 1420, 2220, 2320) forming a second media section, the first and second plurality of flutes (250) being arranged in a parallel flow configuration, wherein a fluid stream to be filtered diverges into the first and second plurality of flutes, and then converges again later,
the first plurality of flutes and second plurality of flutes extending from a first face to a second face of the filtration media pack, a first portion of the first and second plurality of flutes are closed to unfiltered air flowing into the first portion of the first and second plurality of flutes, and a second portion of the first and second plurality of flutes are closed to unfiltered air from flowing out of the second portion of the first and second plurality of flutes, wherein air passing into flutes on one face of the media pack passes through filter media before flowing out flutes on the other face of the media pack; and
wherein the first plurality of flutes and second plurality of flutes exhibit differences in flute shape, flute size, flute height, flute width, cross-flute area, or filter media such that the two media sections have distinct pressure loss and loading properties, the difference being at least 5 percent, and
wherein the first and second plurality of layers of fluted single facer media are arranged in an intermixed configuration with one or more layers of the first plurality of fluted single facer media alternating with one or more layers of the second plurality of fluted single facer media.

2. The air filtration media pack (800) of claim 1, wherein the first plurality of flutes (810) comprises from 10 to 90 percent of the volume of the media pack (800), and the second plurality of flutes (820) comprises from 90 to 10 percent of the volume of the media pack (800), preferably,
a) wherein the first plurality of flutes (810) comprises from 20 to 40 percent of the volume of the media pack (800), and the second plurality of flutes (820) comprises from 60 to 80 percent of the volume of the media pack (800), or,
b) wherein the first plurality of flutes (810) comprises from 40 to 60 percent of the volume of the media pack (800), and the second plurality of flutes (820) comprises from 60 to 40 percent of the volume of the media pack (800);
wherein pack volume means the total volume occupied by the media pack when measuring that area contained within the perimeter of the pack and includes the media itself as well as the open volume into which dust can load.

3. The air filtration media pack (800) of any of claims 1-2, wherein the first plurality of flutes (810) comprises from 10 to 90 percent of the media surface area of the media pack (800), and the second plurality of flutes (820) comprises from 90 to 10 percent of the media surface area of the media pack (800), preferably
a) wherein the first plurality of flutes (810) comprises from 20 to 40 percent of the media surface area of the media pack (800), and the second plurality of flutes (820) comprises from 60 to 80 percent of the media surface area of the media pack (800), or
b) wherein the first plurality of flutes (810) comprises from 40 to 60 percent of media surface area of the media pack (800), and the second plurality of flutes (820) comprises from 60 to 40 percent of the media surface area of the media pack (800);
wherein pack surface area means the total surface area of the media in each media pack if the media pack was taken apart and the media stretched out.

4. The air filtration media pack (800) of any of claims 1-3, wherein the first plurality of flutes (810) comprises from 10 to 90 percent of the inlet face surface area of the media pack (800), and the second plurality of flutes (820) comprises from 90 to 10 percent of the inlet face surface area of the media pack (800), preferably
a) wherein the first plurality of flutes (810) comprises from 20 to 40 percent of the inlet face surface area of the media pack (800), and the second plurality of flutes (820) comprises from 60 to 80 percent of the inlet face surface area of the media pack (800), or
b) wherein the first plurality of flutes (810) comprises from 40 to 60 percent of the inlet face surface area of the media pack (800), and the second plurality of flutes (820) comprises from 60 to 40 percent of the inlet face surface area of the media pack (800);
wherein the inlet face surface area of the media pack is the portion of the inlet face surface area occupied by a specific media type.

5. The air filtration media pack (800) of any of claims 1-4, further comprising a third plurality of flutes (830) arranged in parallel flow with the first and second plurality of flutes (810, 820);
wherein the first, second, and third plurality of flutes (810, 820, 830) exhibit differences in flute shape, flute size, flute height, flute width, cross-flute area, or filter media.

6. The air filtration media pack (800) of claim 5, wherein each of the first, second, and third pluralities of flutes (810, 820, 830) is arranged in a separate plurality of layers.

7. The air filtration media pack (800) of claim 6, wherein the first, second, and third plurality of flutes (810, 820, 830) are arranged in an intermixed configuration with one more of the plurality of layers alternating with others of the plurality of layers.

8. The air filtration media pack (800) of any of claims 1-7, wherein the plurality of layers media are arranged in a wound configuration.

9. The air filtration media pack (800) of any of claims 1-8, wherein the differences in flute shape, flute size, flute height, flute width, cross-flute area or filter media are regular and repeating.

10. The air filtration media pack (800) of any of claims 1-9, wherein the differences in flute shape, flute size, flute height, flute width, cross-flute area or filter media are repeating within a layer as well as between layers.

11. A filter element (10) comprising the filtration media pack (800) of claim 1.

12. The filter element (10) of claim 11, including an inlet (12), an outlet (14) on the opposite side from the inlet (12), a seal (30) surrounding the inlet (12), and a support frame (40).

13. A method of filtering a fluid stream, the method comprising passing a fluid stream through the filter element (10) of claim 11.

## Patentansprüche

1. Luftfiltermedienpaket (1300, 1400, 2200, 2300), das Folgendes umfasst:
eine Vielzahl von Lagen gewellter Einseiten-Medien (200, 1310, 1410, 2210, 2310), wobei die Einseiten-Medien (200, 1310, 1410, 2210, 2310) ein gewelltes Blatt (210) und ein unterseitiges Blatt (230) umfassen,
eine erste Vielzahl von Wellen (250), die in dem gewellten Blatt (210) einer ersten Vielzahl von Lagen gewellter Einseiten-Medien (200, 1310, 1410, 2210, 2310) angeordnet sind und einen ersten Medienabschnitt bilden, und eine zweite Vielzahl von Wellen (250), die in dem gewellten Blatt (210) einer zweiten Vielzahl von Lagen gewellter Einseiten-Medien (200, 1320, 1420, 2220, 2320) angeordnet sind, die einen zweiten Medienabschnitt bilden, wobei die erste und die zweite Vielzahl von Wellen (250) in einer parallelen Strömungskonfiguration angeordnet sind, wobei ein zu filternder Fluidstrom in die erste und die zweite Vielzahl von Wellen divergiert und dann später wieder konvergiert, wobei
die erste Vielzahl von Wellen und die zweite Vielzahl von Wellen sich von einer ersten Fläche zu einer zweiten Fläche des Filtermedienpakets erstrecken, wobei ein erster Abschnitt der ersten und zweiten Vielzahl von Wellen für ungefilterte Luft, die in den ersten Abschnitt der ersten und zweiten Vielzahl von Wellen strömt, verschlossen ist und ein zweiter Abschnitt der ersten und zweiten Vielzahl von Wellen für ungefilterte Luft geschlossen ist, die aus dem zweiten Abschnitt der ersten und zweiten Vielzahl von Rinnen strömt, wobei Luft, die in die Wellen auf einer Seite des Medienpakets eintritt, durch das Filtermedium strömt, bevor sie aus den Wellen auf der anderen Seite des Medienpakets strömt; und
wobei die erste Vielzahl von Wellen und die zweite Vielzahl von Wellen Unterschiede in der Wellenform, der Wellengröße, der Wellenhöhe, der Wellenbreite, der Wellenquerschnittsfläche oder dem Filtermedium aufweisen, so dass die beiden Medienabschnitte unterschiedliche Druckverlust- und Beladungseigenschaften aufweisen, wobei der Unterschied mindestens 5 Prozent beträgt, und
wobei die erste und die zweite Vielzahl von Lagen aus gewellte Einseiten-Medien in einer gemischten Konfiguration angeordnet sind, wobei eine oder mehrere Lagen der ersten Vielzahl von gewellten Einseiten-Medien mit einer oder mehreren Lagen der zweiten Vielzahl von gewellten Einseiten-Medien abwechseln.

2. Luftfiltermedienpaket (800) nach Anspruch 1, wobei die erste Vielzahl von Wellen (810) 10 bis 90 Prozent des Volumens des Medienpakets (800) ausmacht, und die zweite Vielzahl von Wellen (820) vorzugsweise 90 bis 10 Prozent des Volumens des Medienpakets (800) ausmacht,
a) wobei die erste Vielzahl von Wellen (810) 20 bis 40 Prozent des Volumens des Medienpakets (800) ausmacht und die zweite Vielzahl von Wellen (820) 60 bis 80 Prozent des Volumens des Medienpakets (800) ausmacht, oder,
b) wobei die erste Vielzahl von Wellen (810) 40 bis 60 Prozent des Volumens des Medienpakets (800) ausmacht und die zweite Vielzahl von Wellen (820) 60 bis 40 Prozent des Volumens des Medienpakets (800) ausmacht;
wobei unter Packungsvolumen das Gesamtvolumen zu verstehen ist, das von dem Medienpaket eingenommen wird, wenn die innerhalb des Umfangs des Pakets enthaltene Fläche gemessen wird, und das sowohl die Medien selbst als auch das offene Volumen, in das Staub eingefüllt werden kann, umfasst.

3. Luftfiltermedienpaket (800) nach einem der Ansprüche 1 bis 2, wobei die erste Vielzahl von Wellen (810) 10 bis 90 Prozent der Medienoberfläche des Medienpakets (800) ausmacht und die zweite Vielzahl von Wellen (820) 90 bis 10 Prozent der Medienoberfläche des Medienpakets (800) ausmacht, vorzugsweise
a) wobei die erste Vielzahl von Wellen (810) 20 bis 40 Prozent des Medienoberflächenbereichs des Medienpakets (800) umfasst und die zweite Vielzahl von Wellen (820) 60 bis 80 Prozent der Medienoberfläche des Medienpakets (800) umfasst, oder
b) wobei die erste Vielzahl von Wellen (810) 40 bis 60 Prozent der Medienoberfläche des Medienpakets (800) umfasst, und die zweite Vielzahl von Wellen (820) 60 bis 40 Prozent der Medienoberfläche des Medienpakets (800) umfasst;
wobei unter Packungsoberfläche die Gesamtoberfläche der Medien in jeder Medienpackung zu verstehen ist, wenn die Medienpackung auseinandergenommen und die Medien ausgestreckt würden.

4. Luftfiltermedienpaket (800) nach einem der Ansprüche 1 bis 3, wobei die erste Vielzahl von Wellen (810) 10 bis 90 Prozent der Einlassflächenoberfläche der Medienpackung (800) umfasst und die zweite Vielzahl von Wellen (820) 90 bis 10 Prozent der Einlassflächenoberfläche der Medienpackung (800) umfasst, vorzugsweise
a) wobei die erste Vielzahl von Wellen (810) 20 bis 40 Prozent der Einlassflächenoberfläche des Medienpakets (800) ausmacht und die zweite Vielzahl von Wellen (820) 60 bis 80 Prozent der Einlassflächenoberfläche des Medienpakets (800) ausmacht, oder
b) wobei die erste Vielzahl von Wellen (810) 40 bis 60 Prozent der Einlassflächenoberfläche des Medienpakets (800) umfasst und die zweite Vielzahl von Wellen (820) 60 bis 40 Prozent der Einlassflächenoberfläche des Medienpakets (800) umfasst;
wobei die Einlassflächenoberfläche des Medienpakets der Teil der Einlassflächenoberfläche ist, der von einem bestimmten Medientyp eingenommen wird.

5. Luftfiltermedienpaket (800) nach einem der Ansprüche 1-4, das ferner eine dritte Vielzahl von Wellen (830) umfasst, die parallel zu der ersten und zweiten Vielzahl von Wellen (810, 820) angeordnet sind;
wobei die erste, zweite und dritte Vielzahl von Wellen (810, 820, 830) Unterschiede in der Wellenform, Wellengröße, Wellenhöhe, Wellenbreite, Wellenquerschnittsfläche oder im Filtermedium aufweisen.

6. Luftfiltermedienpaket (800) nach Anspruch 5, wobei jede der ersten, zweiten und dritten Vielzahl von Wellen (810, 820, 830) in einer separaten Vielzahl von Lagen angeordnet ist.

7. Luftfiltermedienpaket (800) nach Anspruch 6, wobei die erste, zweite und dritte Vielzahl von Rillen (810, 820, 830) in einer gemischten Konfiguration angeordnet sind, wobei eine weitere der Vielzahl von Schichten mit anderen der Vielzahl von Schichten abwechselt.

8. Luftfiltermedienpaket (800) nach einem der Ansprüche 1-7, wobei die mehreren Lagen Medien in einer gewickelten Konfiguration angeordnet sind.

9. Luftfiltermedienpaket (800) nach einem der Ansprüche 1-8, wobei die Unterschiede in der Wellenform, der Wellengröße, der Wellenhöhe, der Wellenbreite, der Wellenquerschnittsfläche oder dem Filtermedium regelmäßig und sich wiederholend sind.

10. Luftfiltermedienpaket (800) nach einem der Ansprüche 1-9, wobei sich die Unterschiede in der Wellenform, der Wellengröße, der Wellenhöhe, der Wellenbreite, der Wellenquerschnittsfläche oder dem Filtermedium sowohl innerhalb einer Lage als auch zwischen den Lagen wiederholen.

11. Filterelement (10), umfassend das Luftfiltermedienpaket (800) nach Anspruch 1.

12. Filterelement (10) nach Anspruch 11, mit einem Einlass (12), einem Auslass (14) auf der dem Einlass (12) gegenüberliegenden Seite, einer den Einlass (12) umgebenden Dichtung (30) und einem Stützrahmen (40).

13. Verfahren zum Filtern eines Fluidstroms, wobei das Verfahren das Durchleiten eines Fluidstroms durch das Filterelement (10) nach Anspruch 11 umfasst.

## Revendications

1. Bloc de milieu de filtration de l'air (1300, 1400, 2200, 2300) comprenant:
une pluralité de couches de milieu simple face cannelé (200, 1310, 1410, 2210, 2310), le milieu simple face (200, 1310, 1410, 2210, 2310) comprenant une feuille cannelée (210) et une feuille de face inférieure (230),
une première pluralité de cannelures (250) disposée dans la feuille cannelée (210) d'une première pluralité de couches de milieu simple face cannelé (200, 1310, 1410, 2210, 2310) formant une première section de milieu, et une deuxième pluralité de cannelures (250) disposée dans la feuille cannelée (210) d'une deuxième pluralité de couches de milieu simple face cannelé (200, 1320, 1420, 2220, 2320) formant une deuxième section de milieu, les première et deuxième pluralité de cannelures (250) étant disposées selon une configuration d'écoulement en parallèle, dans laquelle un courant de fluide devant être filtré diverge dans les première et deuxième pluralité de cannelures, et ensuite converge de nouveau plus tard,
la première pluralité de cannelures et la deuxième pluralité de cannelures s'étendant d'une première face à une deuxième face du bloc de milieu de filtration, une première portion des première et deuxième pluralité de cannelures est fermée à l'air non filtré s'écoulant dans la première portion des première et deuxième pluralité de cannelures, et une deuxième portion des première et deuxième pluralité de cannelures est fermée à l'air non filtré s'écoulant hors de la deuxième portion des première et deuxième pluralités de cannelures, dans lesquelles l'air passant dans les cannelures sur une face du bloc de milieu traverse le milieu filtrant avant de s'écouler hors des cannelures sur l'autre face du bloc de milieu; et
dans lequel la première pluralité de cannelures et la deuxième pluralité de cannelures présentent des différences dans la forme des cannelures, la taille des cannelures, la hauteur des cannelures, la largeur des cannelures, la superficie en coupe transversale des cannelures, ou le milieu filtrant, si bien que les deux sections de milieu ont des propriétés distinctes de chargement et de perte de pression, la différence étant d'au moins 5 %, et
dans lequel les première et deuxième pluralités de couches de milieu simple face cannelé sont disposées selon une configuration entremêlée avec une ou plusieurs couches de la première pluralité de milieux simple face cannelés qui alternent avec une ou plusieurs couches de la deuxième pluralité de milieux simple face cannelés.

2. Bloc de milieu de filtration de l'air (800) selon la revendication 1, dans lequel la première pluralité de cannelures (810) représente 10 à 90 % du volume du bloc de milieu (800), et la deuxième pluralité de cannelures (820) représente 90 à 10 % du volume du bloc de milieu (800), de préférence
a) dans lequel la première pluralité de cannelures (810) représente 20 à 40 % du volume du bloc de milieu (800), et la deuxième pluralité de cannelures (820) représente 60 à 80 % du volume du bloc de milieu (800), ou
b) dans lequel la première pluralité de cannelures (810) représente 40 à 60 % du volume du bloc de milieu (800), et la deuxième pluralité de cannelures (820) représente 60 à 40 % du volume du bloc de milieu (800);
dans lequel le volume de milieu signifie le volume total occupé par le bloc de milieu lors de la mesure de la superficie contenue à l'intérieur du périmètre du bloc et englobe le milieu lui-même ainsi que le volume ouvert dans lequel de la poussière peut se charger.

3. Bloc de milieu de filtration de l'air (800) selon l'une quelconque des revendications 1 et 2, dans lequel la première pluralité de cannelures (810) représente 10 à 90 % de la superficie du milieu du bloc de milieu (800), et la deuxième pluralité de cannelures (820) représente 90 à 10 % de la superficie du milieu du bloc de milieu (800), de préférence
a) dans lequel la première pluralité de cannelures (810) représente 20 à 40 % de la superficie du milieu du bloc de milieu (800), et la deuxième pluralité de cannelures (820) représente 60 à 80 % de la superficie du milieu du bloc de milieu (800), ou
b) dans lequel la première pluralité de cannelures (810) représente 40 à 60 % de la superficie du milieu du bloc de milieu (800), et la deuxième pluralité de cannelures (820) représente 60 à 40 % de la superficie du milieu du bloc de milieu (800);
dans lequel la superficie du bloc signifie la superficie totale du milieu dans chaque bloc de milieu si le bloc de milieu était pris à part et le milieu était déployé.

4. Bloc de milieu de filtration de l'air (800) selon l'une quelconque des revendications 1 à 3, dans lequel la première pluralité de cannelures (810) représente 10 à 90 % de la superficie de face d'entrée du bloc de milieu (800), et la deuxième pluralité de cannelures (820) représente 90 à 10 % de la superficie de face d'entrée du bloc de milieu (800), de préférence
a) dans lequel la première pluralité de cannelures (810) représente 20 à 40 % de la superficie de face d'entrée du bloc de milieu (800), et la deuxième pluralité de cannelures (820) représente 60 à 80 % de la superficie de face d'entrée du bloc de milieu (800), ou
b) dans lequel la première pluralité de cannelures (810) représente 40 à 60 % de la superficie de face d'entrée du bloc de milieu (800), et la deuxième pluralité de cannelures (820) représente 60 à 40 % de la superficie de face d'entrée du bloc de milieu (800) ;
dans lequel la superficie de face d'entrée du bloc de milieu est la portion de la superficie de face d'entrée occupée par un type de milieu spécifique.

5. Bloc de milieu de filtration de l'air (800) selon l'une quelconque des revendications 1 à 4, comprenant en outre une troisième pluralité de cannelures (830) disposée en écoulement parallèle avec les première et deuxième pluralité de cannelures (810, 820) ;
dans lequel les première, deuxième et troisième pluralités de cannelures (810, 820, 830) présentent des différences dans la forme des cannelures, la taille des cannelures, la hauteur des cannelures, la largeur des cannelures, la superficie en coupe transversale des cannelures, ou le milieu filtrant.

6. Bloc de milieu de filtration de l'air (800) selon la revendication 5, dans lequel chacune des première, deuxième et troisième pluralités de cannelures (810, 820, 830) est disposée dans une pluralité séparée de couches.

7. Bloc de milieu de filtration de l'air (800) selon la revendication 6, dans lequel les première, deuxième et troisième pluralités de cannelures (810, 820, 830) sont disposées selon une configuration entremêlée avec une ou plusieurs parmi la pluralité de couches qui alternent avec d'autres parmi la pluralité de couches.

8. Bloc de milieu de filtration de l'air (800) selon l'une quelconque des revendications 1 à 7, dans lequel la pluralité de couches de milieu est disposée selon une configuration enroulée.

9. Bloc de milieu de filtration de l'air (800) selon l'une quelconque des revendications 1 à 8, dans lequel les différences dans la forme des cannelures, la taille des cannelures, la hauteur des cannelures, la largeur des cannelures, la superficie en coupe transversale des cannelures, ou le milieu filtrant, sont régulières et répétitives.

10. Bloc de milieu de filtration de l'air (800) selon l'une quelconque des revendications 1 à 9, dans lequel les différences dans la forme des cannelures, la taille des cannelures, la hauteur des cannelures, la largeur des cannelures, la superficie en coupe transversale des cannelures, ou le milieu filtrant, sont répétitives à l'intérieur d'une couche ainsi qu'entre des couches.

11. Elément filtrant (10) comprenant le bloc de milieu de filtration (800) de la revendication 1.

12. Elément filtrant (10) selon la revendication 11, comprenant une entrée (12), une sortie (14) sur le côté opposé à l'entrée (12), une garniture d'étanchéité (30) entourant l'entrée (12), et un cadre de support (40).

13. Procédé de filtration d'un courant de fluide, le procédé comprenant le passage d'un courant de fluide à travers l'élément filtrant (10) de la revendication 11.
